(19) Europäisches Patentamt
European Patent Office
Office européen des brevets

(11) **EP 2 711 669 A1**

(12) **EUROPEAN PATENT APPLICATION**
published in accordance with Art. 153(4) EPC

(43) Date of publication:
**26.03.2014 Bulletin 2014/13**

(51) Int Cl.:
***G01C 21/00*** (2006.01)

(21) Application number: **12785505.4**

(22) Date of filing: **09.05.2012**

(86) International application number:
**PCT/JP2012/062441**

(87) International publication number:
**WO 2012/157652 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2011 JP 2011110730**

(71) Applicant: **Sony Corporation Tokyo 108-0075 (JP)**

(72) Inventor: **TAKAOKA, Tomohisa Tokyo 108-0075 (JP)**

(74) Representative: **Beder, Jens Mitscherlich & Partner Sonnenstraße 33 80331 München (DE)**

(54) **TRAVEL ORIENTATION CALCULATION APPARATUS, TRAVEL ORIENTATION CALCULATION METHOD, TRAVEL ORIENTATION CALCULATION PROGRAM, AND NAVIGATION APPARATUS**

(57) A travel orientation can be calculated with a high degree of accuracy.

A travel orientation calculation apparatus of the present disclosure includes a detecting unit that detects a vertical acceleration representing an acceleration in a vertical direction and a horizontal acceleration representing an orientation and a magnitude of an acceleration in a horizontal plane among accelerations generated along with walking of a user, a walking period setting unit that sets a period of time corresponding to two steps of the user as a walking period based on a zero-cross point of the vertical acceleration, an acceleration/deceleration switching phase setting unit that sets an acceleration/ deceleration switching phase at which switching between acceleration and deceleration in the user's travel direction is performed based on a phases at which the magnitude of the horizontal acceleration is minimum in the walking period, an acceleration/deceleration section estimating unit that alternately estimates each section delimited at each acceleration/deceleration switching phase as an acceleration section or a deceleration section, and a travel orientation deciding unit that decides the user's travel orientation based on an orientation represented by the horizontal acceleration in the deceleration section and an orientation opposite to the orientation represented by the horizontal acceleration in the acceleration section.

*FIG. 4*

EP 2 711 669 A1

## Description

### TECHNICAL FIELD

The present disclosure relates to a travel orientation calculation apparatus, a travel orientation calculation method, a travel orientation calculation program, and a navigation apparatus, which are suitably applicable to a smart phone having a navigation function, for example.

### BACKGROUND ART

In recent years, portable telephones called smart phones have been widely spread. Such a smart phone is small in size and high in portability and has a high operation process function, a large-scale display screen, a touch panel, and the like in addition to a communication function, and is configured to be capable of executing various kinds of application programs.

Further, the smart phones includes various kinds of sensors such as an acceleration sensor and a geomagnetic sensor, a global positioning system (GPS) antenna, and the like therein, and executes a predetermined navigation program and functions as a portable navigation apparatus.

In this case, similarly to a general navigation apparatus, the smart phone can receive radio signals from GPS satellites through a GPS antenna, calculate a current position, and provide various kinds of guidance such as a map screen around the current position and a route to a desired destination.

Further, a navigation apparatus in which when it is difficult to receive a GPS signal, based on an acceleration detection result by an acceleration sensor, the magnetic north detection result by a geomagnetic sensor, or the like, a travel orientation and a moving distance of a user are calculated, and a current position is estimated has been proposed (for example, see Patent Document 1).

In the navigation apparatus, the travel orientation of the user is calculated, for example, using a relation between a peak of a waveform of a vertical component and a peak of a waveform of a horizontal component of an acceleration detected by an acceleration sensor.

### CITATION LIST

### PATENT DOCUMENT

Patent Document 1: Japanese Patent No. 4126388 (Fig. 1)

### SUMMARY OF THE INVENTION

### PROBLEMS TO BE SOLVED BY THE INVENTION

Meanwhile, while walking, the user is likely to keep a smart phone in various places, for example, such as in a jacket pocket, a trouser pocket, a bag, or otherwise grips the smart phone with his/her hand.

In this case, in the smart phone, since a direction in which external force associated with walking is applied significantly varies according to a place where the user keeps the smart phone, a waveform of a vertical component or a waveform of a horizontal component of a detection value by an acceleration sensor significantly varies, and for example, an expected peak may not appear.

For this reason, in the smart phone, there is a problem in that there are cases in which it is difficult to calculate a travel orientation without using a relation between a peak of a waveform of a vertical component and a peak of a waveform of a horizontal component depending on a place where the user keeps the smart phone.

The present disclosure has been made in light of the foregoing, and it is desirable to propose a travel orientation calculation apparatus, a travel orientation calculation method, and a travel orientation calculation program, which are capable of calculating a travel orientation with a high degree of accuracy, and a navigation apparatus capable of calculating a travel orientation with a high degree of accuracy and providing appropriate guidance.

### SOLUTIONS TO PROBLEMS

In order to solve the above problems, in a travel orientation calculation apparatus, a travel orientation calculation method, and a travel orientation calculation program according to the present disclosure, a vertical acceleration representing an acceleration in a vertical direction and a horizontal acceleration representing an orientation and a magnitude of an acceleration in a horizontal plane among accelerations generated along with walking of a user are detected, a period of time corresponding to two steps of the user is set as a walking period based on a zero-cross point of the vertical acceleration, an acceleration/deceleration switching phase at which switching between acceleration and deceleration in the user's travel direction is performed is set based on a phases at which the magnitude of the horizontal acceleration is minimum in the walking period, each section delimited at each acceleration/deceleration switching phase is estimated as an acceleration section or a deceleration section alternately, and the user's travel orientation is decided based on an orientation represented by the horizontal acceleration in the deceleration section and an orientation opposite to the orientation represented by the horizontal acceleration in the acceleration section.

In the present disclosure, the reference of the walking period can be properly set based on the zero-cross point of the vertical acceleration, the acceleration/deceleration switching phase can be determined using the minimum point of the horizontal acceleration with a high degree of accuracy, and the acceleration section and deceleration section can be appropriately set based on the acceleration/deceleration switching phase. Thus, a relation between a direction of an acceleration which is sequentially obtained and the user's travel direction can be properly associated with each other.

Further, a navigation apparatus according to the present disclosure includes a detecting unit that detects a vertical acceleration representing an acceleration in a vertical direction and a horizontal acceleration representing an orientation and a magnitude of an acceleration in a horizontal plane among accelerations generated along with walking of a user, a walking period setting unit that sets a period of time corresponding to two steps of the user as a walking period based on a zero-cross point of the vertical acceleration, an acceleration/deceleration switching phase setting unit that sets an acceleration/deceleration switching phase at which switching between acceleration and deceleration in the user's travel direction is performed based on a phases at which the magnitude of the horizontal acceleration is minimum in the walking period, an acceleration/deceleration section estimating unit that alternately estimates each section delimited at each acceleration/deceleration switching phase as an acceleration section or a deceleration section, a travel orientation deciding unit that decides the user's travel orientation based on an orientation represented by the horizontal acceleration in the deceleration section and an orientation opposite to the orientation represented by the horizontal acceleration in the acceleration section, and a provision control unit that provides the user with guidance based on a current position detected by a predetermined position detecting unit and the travel orientation through a predetermined providing unit.

In the navigation apparatus according to the present disclosure, the reference of the walking period can be properly set based on the zero-cross point of the vertical acceleration, the acceleration/deceleration switching phase can be determined using the minimum point of the horizontal acceleration with a high degree of accuracy, and the acceleration section and deceleration section can be appropriately set based on the acceleration/deceleration switching phase. Thus, a relation between a direction of an acceleration which is sequentially obtained and the user's travel direction can be properly associated with each other.

According to the present disclosure, the reference of the walking period can be properly set based on the zero-cross point of the vertical acceleration, the acceleration/deceleration switching phase can be determined using the minimum point of the horizontal acceleration with a high degree of accuracy, and the acceleration section and deceleration section can be appropriately set based on the acceleration/deceleration switching phase. Thus, a relation between a direction of acceleration which is sequentially obtained and the user's travel direction can be properly associated with each other. Thus, according to the present disclosure, it is possible to implement a travel orientation calculation apparatus, a travel orientation calculation method, and a travel orientation calculation program, which are capable of calculating a travel orientation with a high degree of accuracy and a navigation apparatus which is capable of calculating a travel orientation with a high degree of accuracy and providing appropriate guidance.

BRIEF DESCRIPTION OF DRAWINGS

    Fig. 1 is a schematic perspective view illustrating an external appearance of a smart phone.
    Fig. 2 is a schematic block diagram illustrating a circuit configuration of a smart phone.
    Fig. 3 is a schematic diagram illustrating a functional block configuration of a control unit when a current position calculation process is executed.
    Fig. 4 is a schematic diagram illustrating a functional block configuration of a travel orientation calculating unit.
    Fig. 5 is a schematic diagram illustrating a travel direction vector of a user.
    Fig. 6 is a schematic diagram illustrating a carrying position of a smart phone.
    Figs. 7 (A) to 7(C) are schematic diagrams illustrating (A) a detection coordinate system, (B) an earth coordinate system and (C) an acceleration in an xy plane.
    Figs. 8(A) and 8(B) are schematic diagrams illustrating (A) a change in an acceleration before a band detection process and (B) a change in an acceleration after a band detection process, respectively.

Fig. 9 is a schematic diagram illustrating a relation between a body motion of a user and a vertical acceleration at the time of walking.

Fig. 10 is a schematic diagram illustrating a distribution (breast pocket) of a horizontal acceleration.

Fig. 11 is a schematic diagram illustrating a distribution (jacket right pocket) of a horizontal acceleration.

Fig. 12 is a schematic diagram illustrating a distribution (hip pocket) of a horizontal acceleration.

Figs. 13(A) to 13(C) are schematic diagrams illustrating (A) a vertical acceleration, (B) a horizontal acceleration, and (C) an orientation angle (breast pocket) at the time of walking, respectively.

Fig. 14 (A) to 14(C) are schematic diagrams illustrating (A) a vertical acceleration, (B) a horizontal acceleration, and (C) an orientation angle (jacket right pocket) at the time of walking, respectively.

Fig. 15 (A) to 15(C) are schematic diagrams illustrating (A) a vertical acceleration, (B) a horizontal acceleration, and (C) an orientation angle (hip pocket) at the time of walking, respectively.

Fig. 16 is a schematic diagram illustrating an auto-correlation evaluation value (breast pocket).

Fig. 17 is a schematic diagram illustrating an auto-correlation evaluation value (jacket right pocket).

Fig. 18 is a schematic diagram illustrating an auto-correlation evaluation value (hip pocket).

Fig. 19 is a schematic diagram illustrating an auto-correlation evaluation value (hand).

Fig. 20 is a schematic diagram illustrating an auto-correlation evaluation value (bag).

Fig. 21 is a schematic diagram for describing determination of a minimum value in an auto-correlation evaluation value.

Figs. 22(A) and 22(B) are schematic diagrams illustrating a change in a walking period (A) before an employment condition is applied and (B) after an employment condition is applied, respectively.

Fig. 23 is a schematic diagram illustrating a zero-cross point in a vertical acceleration.

Fig. 24 is a schematic diagram for describing selection of a phase reference point.

Figs. 25(A) to 25(D) are schematic diagrams illustrating (A) a vertical acceleration, (C) an orientation angle, and (D) a minimum point appearance frequency (breast pocket) in (B) a horizontal acceleration, respectively.

Figs. 26(A) to 26(D) are schematic diagrams illustrating (A) a vertical acceleration, (C) an orientation angle, and (D) a minimum point appearance frequency (jacket right pocket) in (B) a horizontal acceleration, respectively.

Figs. 27(A) to 27(D) are schematic diagrams illustrating (A) a vertical acceleration, (C) an orientation angle, and (D) a minimum point appearance frequency (hip pocket) in (B) a horizontal acceleration, respectively.

Figs. 28(A) to 28(D) are schematic diagrams illustrating (A) a vertical acceleration, (C) an orientation angle, and (D) a minimum point appearance frequency (hand pocket) in (B) a horizontal acceleration, respectively.

Figs. 29(A) to 29(D) are schematic diagrams illustrating (A) a vertical acceleration, (C) an orientation angle, and (D) a minimum point appearance frequency (bag pocket) in (B) a horizontal acceleration, respectively.

Figs. 30(A) and 30(B) are schematic diagrams illustrating a change in a frequency of appearance of a minimum point (A) at the time of normal addition and (B) after an adjacent phase exclusion process.

Figs. 31(A) to 31(D) are schematic diagrams illustrating a determination result (breast pocket) of (D) acceleration and deceleration of (A) a vertical acceleration, (B) a horizontal acceleration, and (C) an orientation angle.

Figs. 32(A) to 32(D) are schematic diagrams illustrating a determination result (breast pocket) of (D) acceleration and deceleration of (A) a vertical acceleration, (B) a horizontal acceleration, and (C) an orientation angle.

Figs. 33(A) to 33(D) are schematic diagrams illustrating a determination result (jacket right pocket) of (D) acceleration and deceleration of (A) a vertical acceleration, (B) a horizontal acceleration, and (C) an orientation angle.

Figs. 34(A) to 34(D) are schematic diagrams illustrating a determination result (jacket right pocket) of (D) acceleration and deceleration of (A) a vertical acceleration, (B) a horizontal acceleration, and (C) an orientation angle.

Figs. 35(A) to 35(D) are schematic diagrams illustrating a determination result (hip pocket) of (D) acceleration and deceleration of (A) a vertical acceleration, (B) a horizontal acceleration, and (C) an orientation angle.

Figs. 36(A) to 36(D) are schematic diagrams illustrating a determination result (hip pocket) of (D) acceleration and deceleration of (A) a vertical acceleration, (B) a horizontal acceleration, and (C) an orientation angle.

Fig. 37 is a flowchart illustrating a travel orientation calculation processing procedure.

Fig. 38 is a flowchart illustrating a walking period calculation sub routine.

Fig. 39 is a flowchart illustrating an acceleration/deceleration switching phase learning sub routine.

Fig. 40 is a schematic diagram illustrating a calculation result (breast pocket) of a travel orientation at the time of walking.

Fig. 41 is a schematic diagram illustrating a calculation result (jacket right pocket) of a travel orientation at the time of walking.

Fig. 42 is a schematic diagram illustrating a calculation result (hip pocket) of a travel orientation at the time of walking.

MODE FOR CARRYING OUT THE INVENTION

Hereinafter, modes (hereinafter, referred to as "embodiments") for carrying out the invention will be described with the appended drawings. The description proceeds in the following order:

1. Embodiment
2. Another embodiment

<1. Embodiment>

[1-1. Configuration of smart phone]

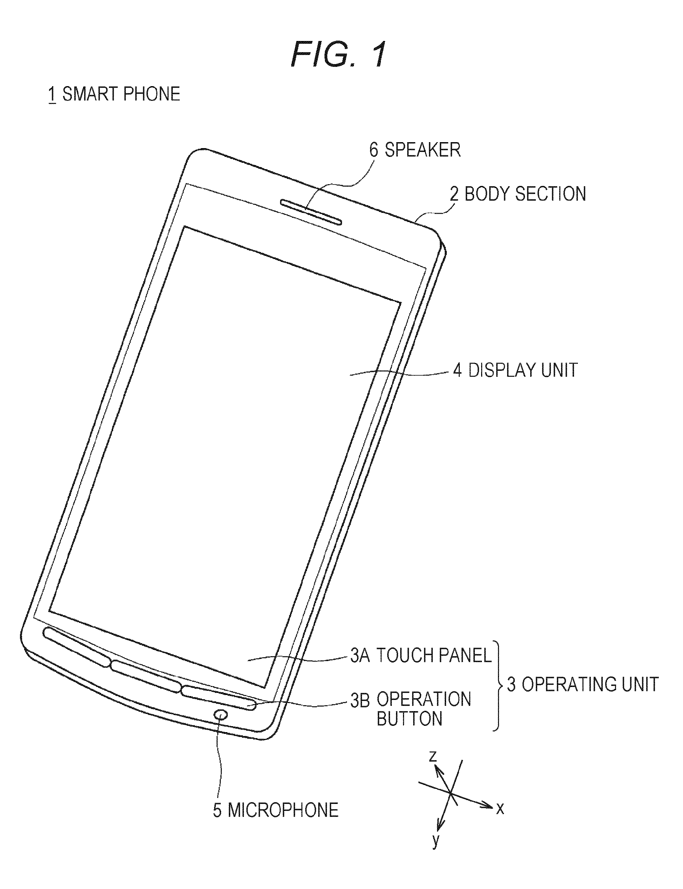

As illustrated in Fig. 1, a smart phone 1 is configured to receive a user's operation instruction through an operating unit 3 of a body section 2, executes various kinds of applications such as a navigation program, and causes a display screen corresponding to an execution result to be displayed on a display unit 4.

Here, when a short-length direction and a longitudinal direction of the display unit 4 and a direction orthogonal to a display screen are defined as an x direction, a y direction, and a z direction, respectively, the body section 2 is about 63 [mm], about 125 [mm], and about 11 [mm] in lengths in the x, y, and z directions and so configured in the form of a thin plate as a whole. In other words, the smart phone 1 is configured to be gripped by the user with one hand or be put in a jacket pocket, a trouser pocket, or the like.

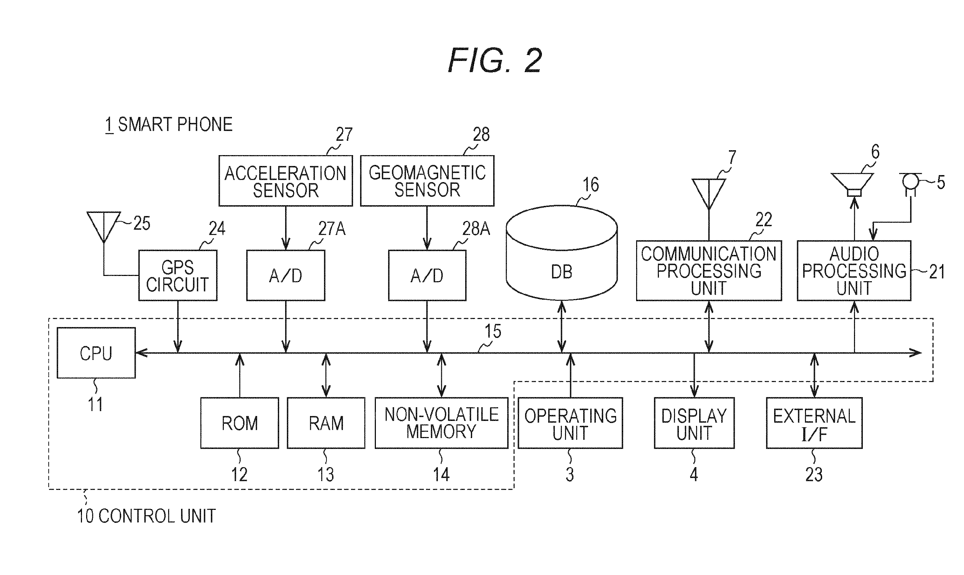

As illustrated in Fig. 2, the smart phone 1 is configured such that respective components are connected with one another centering on a control unit 10, and the control unit 10 controls all components in general.

A central processing unit (CPU) 11 of the control unit 10 reads a basic program, various kinds of application programs, or the like from a read only memory (ROM) 12, a non-volatile memory 14, or the like via a bus 15, and executes the read program using a random access memory (RAM) 13 as a work area. The CPU 11 acquires various kinds of data or instructions supplied via the bus 15, and performs processing based on the acquired data or instruction.

A database (DB) 16 is configured with, for example, a flash memory or the like, and stores various kinds of data such as telephone book data, music data, image data, and map data in a predetermined database format.

The operating unit 3 is configured with a touch panel 3A integrated with the surface of a display panel of the display unit 4 and various operation buttons 3B as illustrated in Fig. 1, and receives the user's operation instruction and supplies an operation signal to the CPU 11.

The display unit 4 includes, for example, a liquid crystal panel, and generates and displays a display screen based on display data supplied via the bus 15.

An audio processing unit 21 converts a sound collected by a microphone 5 into audio data of a digital format, supplies the audio data to the bus 15, and converts audio data acquired via the bus 15 into an audio signal, supplies the audio signal to a speaker 6 to be output as a sound.

A communication processing unit 22 is wirelessly connected with a base station (not illustrated) through an antenna 7, transmits various kinds of data supplied via the bus 15 to the base station, and receives various kinds of data transmitted from the base station, and supplies the received data to the bus 15.

An external interface (I/F) 23 is, for example, a micro universal serial bus (microUSB) terminal, and is configured to exchange data with a computer device (not illustrated) connected via a USB cable (not illustrated).

A GPS circuit 24 receives GPS signals transmitted from GPS satellites (not illustrated) through a GPS antenna 25, and supplies positioning data obtained by performing a predetermined demodulation process, a decoding process, and the like to the bus 15.

An acceleration sensor 27 detects an acceleration in three axial directions of the x, y, and z directions, and generates an acceleration signal. An analog/digital (A/D) converting circuit 27A converts the acceleration signal into a three-dimensional (3D) acceleration A1 of a digital format by sampling the acceleration signal at a sampling rate of 50 [Hz], and supplies the acceleration A1 to the bus 15. The acceleration A1 has a value representing an acceleration generated according to the user's action while the smart phone 1 is being carried by the user.

A geomagnetic sensor 28 detects a direction of a magnetic field formed by geomagnetism, and generates a geomagnetic signal having three axial directions of the x, y, and z directions as components. An A/D converting circuit 28A converts the geomagnetic signal into a 3D geomagnetic value M of a digital format by sampling the geomagnetic signal at a sampling rate of 50 [Hz], and supplies the 3D geomagnetic value M to the bus 15.

Through this configuration, for example, when a call function execution instruction is received from the user through the CPU 11, the control unit 10 executes a predetermined call program, establishes a wireless connection with a base station through the communication processing unit 22, converts a sound collected by the microphone 5 into data, transmits the data to a counterpart, and causes audio data transmitted from the counterpart to be output through the speaker 6.

Further, when a music playback function execution instruction is received from the user through the operating unit 3, the control unit 10 executes a predetermined music playback program, reads music data in a compressed state from the database 16, performs a predetermined decoding process and the like through the audio processing unit 21, and causes the sound to be output through the speaker 5.

Further, for example, when an execution instruction of each application program is received from the user through the operating unit 3 or when each application program is set to be automatically executed, the control unit 10 reads a corresponding application program from the non-volatile memory 14, and executes the corresponding application program. Then, the control unit 10 performs an operation process according to execution content, performs a communication process, and causes a predetermined display screen to be displayed on the display unit 4 or causes a predetermined sound to be output from the speaker 6.

As described above, the smart phone 1 is configured to implement a call function, a music playback function, and various kinds of functions by an application program by executing various kinds of programs according to the user's operation instruction.

[1-2. Navigation process]

Meanwhile, for example, when a navigation function execution instruction is received from the user through the operating unit 3, the control unit 10 reads a navigation program from the non-volatile memory 14, and executes the navigation program.

In the navigation function, an operation mode can be switched according to the user's operation instruction, and a walking mode in which the user is assumed to move on foot is prepared as one of operation modes.

In the walking mode, the control unit 10 is configured to perform a current position calculation process of calculating a walking velocity or a travel orientation using an acceleration value or a geomagnetic value generated by the user's walking motion under the assumption that a reception status of a GPS signal is bad, for example, indoors or near a tall building.

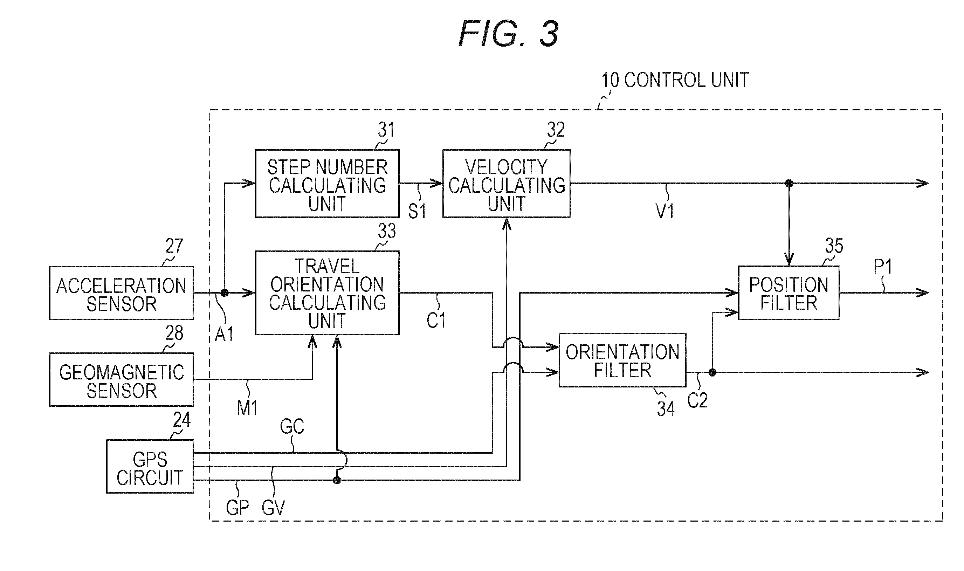

At this time, the control unit 10 is configured to implement a step number calculating unit 31, a velocity calculating unit 32, a travel orientation calculating unit 33, an orientation filter 34, and a position filter 35 according to a navigation program as illustrated in Fig. 3.

The control unit 10 supplies the acceleration A1 obtained from the acceleration sensor 27 to the step number calculating unit 31 and the travel orientation calculating unit 33, and supplies the geomagnetic value M obtained from the geomagnetic sensor 28 to the travel orientation calculating unit 33.

Further, among pieces of positioning data obtained from the GPS circuit 24, the control unit 10 supplies GPS position data GP representing the position to the travel orientation calculating unit 33 and the position filter 35, supplies GPS velocity data GV representing the velocity to the velocity calculating unit 32, and supplies GPS orientation data GC representing an orientation to the orientation filter 34.

The step number calculating unit 31 calculates a walking pitch representing the user's step period and the number of steps based on the acceleration A1, and supplies the walking pitch and the number of steps to the velocity calculating unit 32 as step number data S1.

The velocity calculating unit 32 calculates a walking velocity by multiplying a pace obtained by a predetermined learning process by the walking pitch of the step number data S1, calculates velocity data V1 based on the walking velocity and the GPS velocity data GV, and supplies the velocity data V1 to the position filter 35 and a subsequent processing block (not illustrated).

The travel orientation calculating unit 33 calculates a travel orientation based on an acceleration direction represented by the acceleration A1 and the magnetic northern direction represented by the geomagnetic value M at the time of walking, calculates travel orientation data C1 by correcting the travel orientation using the GPS position data GP (the details will be described later), and supplies the travel orientation data C1 to the orientation filter 34.

The orientation filter 34 generates a travel orientation data C2 representing a current travel orientation by performing weighting on the GPS orientation data GC and the travel orientation data C1 both of which represent an orientation based on the current velocity, a reception status of a GPS signal, and the like, and supplies the travel orientation data C2 to the position filter 35 and a subsequent processing block (not illustrated).

The position filter 35 generates position data P1 based on the velocity data V1, the travel orientation data C2 and the GPS position data GP by performing weighting based on the current velocity, a reception status of a GPS signal, and the like, and supplies the position data P1 to a subsequent processing block (not illustrated).

Then, in a subsequent processing block (not illustrated), the control unit 10 reads map data of a range according to the velocity data V1, the position data P1, and the travel orientation data C2 (which are hereinafter collectively referred to as "current position data D1") from the database 16 (Fig. 1), and causes the map data to be displayed on the display unit 4 as a navigation screen together with a predetermined current position mark or a route to a designated destination.

As described above, the smart phone 1 generates the current position data D1 by calculating the velocity data V1, the travel orientation data C1, and the like based on the acceleration A1, the geomagnetic value M, and the like through the current position calculation process and performing weighting according to a reception status of a GPS signal.

[1-3. Calculation of travel orientation]

Meanwhile, when an instruction to perform switching to the walking mode is received from the user while the navigation program is being executed, the control unit 10 of the smart phone 1 reads a travel orientation calculation program from the non-volatile memory 14, and executes the travel orientation calculation program.

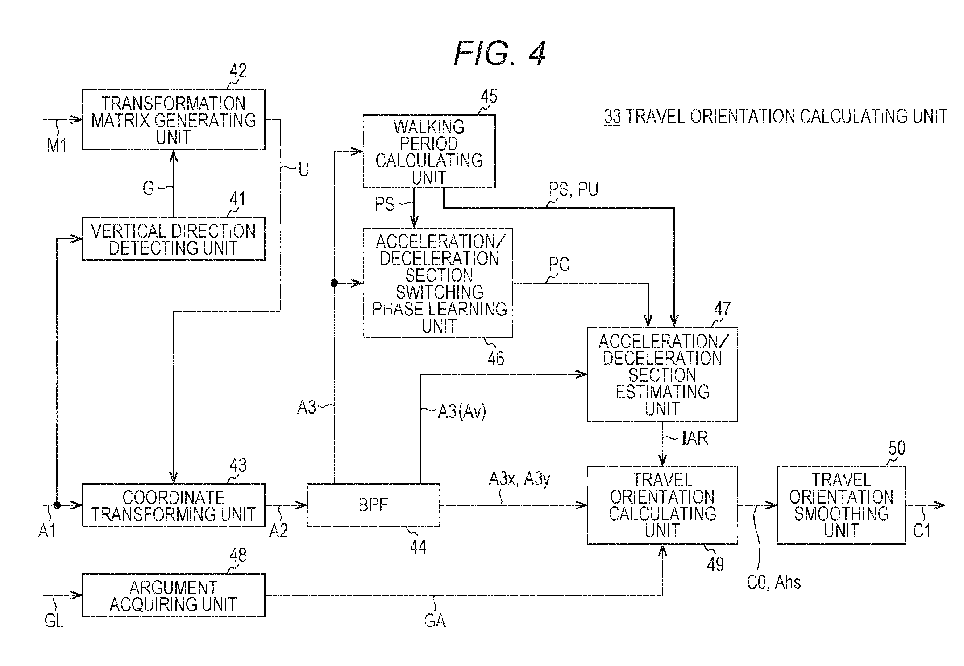

At this time, the control unit 10 causes the travel orientation calculating unit 33 to implement a plurality of functional blocks as illustrated in Fig. 4 and calculate a travel orientation.

In the following, a detailed operation process performed by respective functional blocks until the travel orientation data C1 representing the travel orientation is generated based on the acceleration A1 and the like through the travel orientation calculating unit 33 will be described in detail along with a principle thereof.

[1-3-1. Relation between user's walking and travel orientation]

Generally, when a pedestrian moves in a desired travel direction, a pedestrian who is oriented in the travel direction alternately steps the left foot and the right foot forward to move in the travel direction step by step.

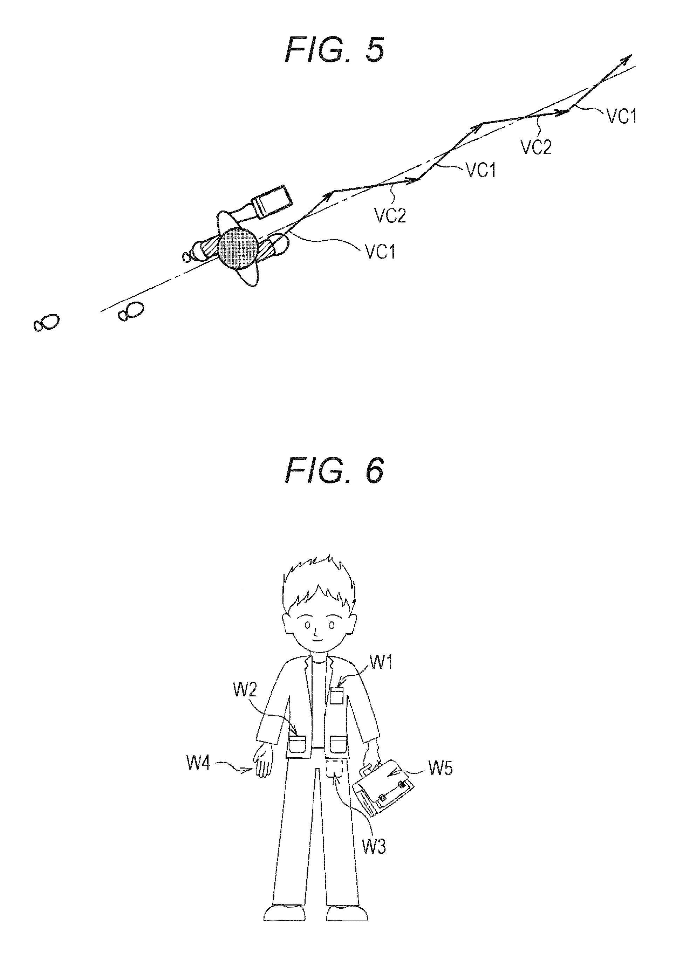

Here, considering a detail travel direction of a pedestrian, as illustrated in a schematic plane view of Fig. 5, a travel direction vector VC1 when the pedestrian steps the right foot and a travel direction vector VC2 when the pedestrian steps the left foot are directed in directions opposite to each other centering on an overall travel direction.

In this case, a synthetic vector which is directed in the almost same direction as the overall travel direction is considered to be obtained when travel direction vectors of two consecutive steps are synthesized.

Further, when the user walks, the smart phone 1 is considered to be carried, for example, to be put in a pocket of a worn cloth or to be gripped by the user's hand. For this reason, the smart phone 1 can detect an acceleration working on its body in association with the user's walking as the acceleration A1 through the acceleration sensor 27. At this time, a direction represented by the detected acceleration A1 is considered to have a deep connection with the travel direction in which the user walks.

Further, the smart phone 1 can represent a direction of the acceleration detected by the acceleration sensor 27 as a travel orientation based on the magnetic north using the geomagnetic value M obtained by the geomagnetic sensor 28.

In this regard, the smart phone 1 is assumed to calculate the user' travel orientation based on the acceleration A1 and the geomagnetic value M obtained during a walking period of time of two consecutive steps.

[1-3-2. Transformation of coordinate system and detection of vertical direction]

Meanwhile, when the smart phone 1 is carried by the user, there are cases in which the smart phone 1 is put in a pocket of a cloth such as a jacket breast pocket W1, a jacket right pocket W2, or a trouser hip pocket W3, gripped by the user's hand W4, or put in a bag W5 carried with the user's hand as illustrated in Fig. 6.

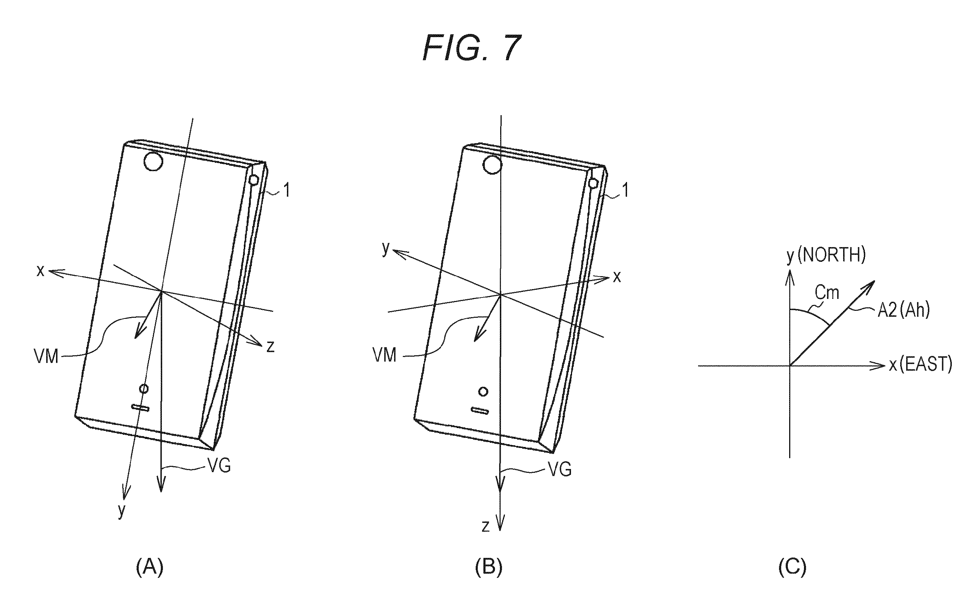

At this time, the smart phone 1 is put in a pocket or the like or gripped by the user's hand (hereinafter, a place in which the smart phone 1 is carried is referred to as a "carrying place") in various directions. In other words, the smart phone 1 is carried by the user at an arbitrary angle as illustrated in Fig. 7(A).

For this reason, a 3D coordinate system (hereinafter, referred to as a "detection coordinate system") represented by an x axis, a y axis, and a z axis specified on the body section 2 of the smart phone 1 is different from a coordinate system (hereinafter, referred to as an "the earth coordinate system") having a vertical direction on the ground as a one axis.

Meanwhile, the acceleration A1 detected by the acceleration sensor 27 includes a component (hereinafter, referred to as "walking acceleration") caused as the user's body moves along with walking and a component of a gravity acceleration (hereinafter, referred to as a "gravity acceleration G").

The walking acceleration also appears in a horizontal direction or a vertical direction relative to the travel direction in addition to a forward direction and a backward direction which is the travel direction along with a motion (hereinafter, referred to as a "walking motion") in which the user alternately steps the left and right foots forward, sets the foot, or steps backward.

Here, when the user is walking at an almost constant velocity in a constant travel direction, the user can be regarded to move at a constant velocity when an entire certain period of time is considered. For this reason, when a front back direction component, a horizontal direction component, and a vertical direction component of the walking acceleration are integrated, respectively, during a certain period of time, all components become zero (0). On the other hand, the gravity acceleration works downward consistently in the vertical direction as indicated by a gravity vector VG in Fig. 7(A).

In other words, when a direction of the gravity acceleration is calculated based on an integration value of the acceleration A1, the travel orientation calculating unit 33 can regard this direction as the z axis direction of the earth coordinate system as illustrated in Fig. 7(B).

Further, the geomagnetic value M detected by the geomagnetic sensor 28 is generated using a geomagnetic vector VM (Fig. 7(A)) representing a direction of the magnetic north as a 3D value by the detection coordinate system. A direction (hereinafter, referred to as a "projection magnetic northern direction") in which a direction of the magnetic north represented by the geomagnetic value M is projected onto the horizontal plane, that is, the xy plane of the earth coordinate system represents the north (magnetic north) direction in the horizontal plane.

Here, for example, as illustrated in Fig. 7(C), when a projection magnetic northern direction is defined as the y axis direction of the earth coordinate system, the y axis direction and the x axis direction perpendicular to the y axis direction represent the northern direction and the eastern direction, respectively, and thus a relation between the detection coordinate system and the earth coordinate system is decided.

In this regard, the travel orientation calculating unit 33 first integrates a value of the acceleration A1 during a certain period of time (for example, for 2 seconds) through a vertical direction detecting unit 41 (Fig. 4), offsets a walking acceleration components, generates the gravity acceleration G (Gx, Gy, Gz), and supplies the gravity acceleration G to a transformation matrix generating unit 42.

The transformation matrix generating unit 42 performs operations according to the following Equations (1), (2), and (3), and calculates unit vectors ex, ey and ez in the x axis direction, the y axis direction, and the z axis direction of the earth coordinate system viewed from the detection coordinate system.

$$e_x = \frac{G \times M}{|G \times M|} \qquad \cdots (1)$$

$$e_y = \frac{G \times M \times G}{|G \times M \times G|} \qquad \cdots (2)$$

$$e_z = \frac{G}{|G|} \qquad \cdots (3)$$

Here, the transformation matrix generating unit 42 merges the unit vectors (ex, ey, ez) of the earth coordinate system into a 3D unit vector U as expressed in the following Equation (4).

$$U = [e_x, e_y, e_z] = \left[ \frac{G \times M}{|G \times M|}, \frac{G \times M \times G}{|G \times M \times G|}, \frac{G}{|G|} \right] \qquad \cdots (4)$$

A matrix represented by the unit vector U represents a transformation matrix from the detection coordinate system to the earth coordinate system. In this regard, the transformation matrix generating unit 42 supplies the transformation matrix U to a coordinate transforming unit 43.

The coordinate transforming unit 43 performs an operation process according to the following Equation (5), performs coordinate transformation from the acceleration A1 of the detection coordinate system to an acceleration A2 (A2x, A2y, A2z) of the earth coordinate system, and supplies the acceleration A2 to a band pass filter (BPF) 44.

$$A2 = U^T A1 \qquad \cdots (5)$$

As described above, the travel orientation calculating unit 33 in the control unit 10 of the smart phone 1 calculates the transformation matrix U from the detection coordinate system to the earth coordinate system based on the direction of the gravity acceleration obtained from the integration value of the acceleration A1 and the direction of the magnetic north represented by the geomagnetic value M, and then transforms the acceleration A1 of the detection coordinate system into the acceleration A2 of the earth coordinate system.

[1-3-3. Extraction of frequency band]

Next, a frequency characteristic of the acceleration A2 will be described. Generally, when humans move on foot, a walking velocity is known as being about two paces per second. For this reason, a component caused by walking is considered to appear in the acceleration A1 of the detection coordinate system at a band centering on about 2 [Hz].

Meanwhile, the acceleration A1 is considered to include a component caused by various factors other than walking such as vibration applied to the smart phone 1 from the outside, that is, a noise component. The noise component is generally considered to have a relative high frequency.

Further, the acceleration A1 includes a component caused by the gravity acceleration G or an offset component of the acceleration sensor 27 as well. The component caused by the gravity acceleration G is a direct current (DC) component, and the offset component is a low-frequency component that changes very slowly (for example, in an order from several seconds to several minutes) along with a change in temperature or the like.

Further, since a frequency characteristic on the acceleration A1 of the detection coordinate system does not change according to coordinate transformation, the frequency characteristic is similarly applied even to the acceleration A2 transformed into the earth coordinate system.

In this regard, in the present embodiment, the BPF 44 extracts a band frequency component having 2 [Hz] as a component mainly caused by walking on the acceleration A2.

Specifically, the BPF 44 of the travel orientation calculating unit 33 performs a band extraction process of extracting about 1 to 10 [Hz] on the acceleration A2, generates an acceleration A3 (A3x, A3y, A3z), and supplies the acceleration A3 to a walking period calculating unit 45 and an acceleration/deceleration section switching phase learning unit 46.

The acceleration A3 represents a component which is significantly reduced in various kinds of noise components, the component of the gravity acceleration G, and the offset component and mainly caused by the user's walking motion.

Further, the BPF 44 supplies the horizontal components (A3x, A3y) of the acceleration A3 to a travel orientation calculating unit 49.

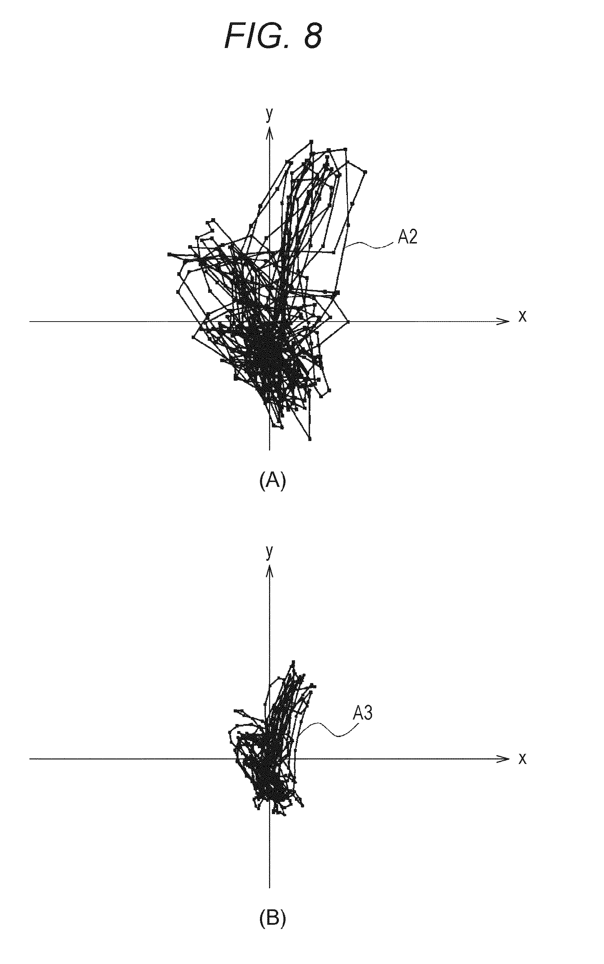

Here, the horizontal component of the acceleration A2 before the band extraction process and the horizontal component of the acceleration A3 after the band extraction process have been plotted on an xy plane for about 10 seconds, and distribution characteristics illustrated in Figs. 8(A) and (B) have been obtained. It can be understood from Figs. 8(A) and (B) that the high-frequency component has been reduced.

In the following, the magnitude of the acceleration (A3x, A3y) in the horizontal direction calculated by the following Equation (6) is referred to as a "horizontal acceleration Ah."

$$Ah = A3x^2 + A3y^2 \qquad \dots (6)$$

Further, the BPF 44 supplies the vertical component (A3z) of the acceleration A3 to an acceleration/deceleration section estimating unit 47. In the following, the vertical component of the acceleration A3 is particularly referred to as "vertical acceleration Av."

As described above, the BPF 44 of the travel orientation calculating unit 33 extracts a frequency band of 1 to 10 [Hz] in the horizontal component of the acceleration A2, and generates the acceleration A3 which is a component mainly caused by a walking motion.

[1-3-4. Relation between acceleration section and deceleration section of horizontal acceleration and travel direction]

Here, first, a relation between a body motion when the user of the smart phone 1 makes a walking motion and acceleration generated at that time will be described.

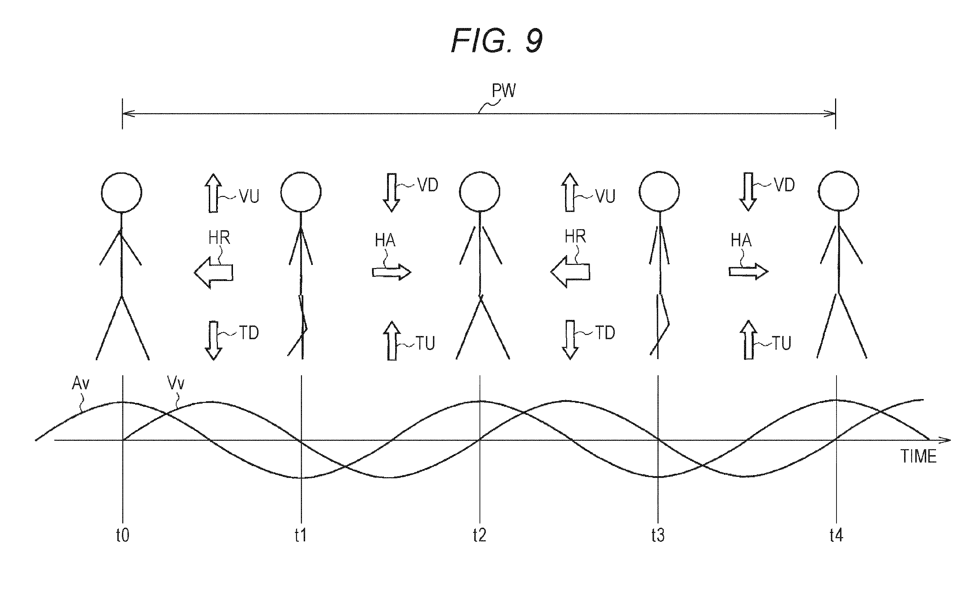

Fig. 9 schematically illustrates a status of a posture during a period of time (hereinafter, referred to as a "walking period PW") in which the user takes two steps on foot at point in time t0 to t4 on a time axis from the left to the right.

In Fig. 9, at the point in time t0, the user is in the state in which he/she has placed the right foot ahead, and from this state, the user lifts the left foot up from behind while moving the upper body forward and then moves the left foot forward, and at the point in time t1, the user is about to move the left foot ahead of the right foot.

Then, the user steps the left foot forward while moving the upper body forward further from the state of the point in time t1, and at the point in time t2, the user brings the left foot into contact with the ground. At this time, the user is in the state in which he/she has taken a step forward from the state of the point in time t0.

Thereafter, during the points in time t2 to t4, the user takes another step forward in the state in which the left and the right are reversed compared to the period of time from the point in time t0 to the point in time t2, that is, by moving the right foot forward from behind while the left foot is brought into contact with the ground.

Further, Fig. 9 illustrates a waveform of the vertical acceleration Av in the up-down direction (that is, the vertical direction) that works on the user's body and a waveform of a vertical velocity Vv in association with the points in time t0 to t4. Further, Fig. 9 illustrates arrows VU and VD in the vertical direction which represent a direction in which the body vertically moves between the respective points in time, arrows HA and HR in the horizontal direction which represent acceleration or deceleration related to the front back direction, and arrows TU and TD in the vertical direction which represent a tendency of an increase or a decrease in the vertical acceleration Av together.

The height of the user's body (mainly, the upper body) is lowest at the points in time t0, t2, and t4 at which the user brings the left and right feet into contact with the ground with one foot forward and the other back. Meanwhile, the height of the user's body is highest at the points in time t1 and t3 at which the user brings one of the left and right feet into contact with the ground, and the whole body from the foot that comes into contact with the ground to the head looks a straight line.

In other words, it can be understood that the user moves so that the user's body is reciprocated twice in the vertical direction during the walking period PW in which two steps are taken as indicated by the arrows VU and VD in the vertical direction.

Here, when the vertical acceleration Av is given attention, the vertical acceleration Av has the maximum value at the point in time t0, and then has the minimum value, the maximum value, the minimum value, and the maximum value at the points in time t1, t2, t3, and t4, and thus it can be understood that two maximum values and two minimum values appear during the walking period PW.

In addition, from a relation with the vertical acceleration Av, the vertical velocity Vv which is the velocity of the user's body in the vertical direction increases from 0, then decreases, and returns to 0 again between the points in time t0 and t1 and between the points in time t2 and t3, and decreases from 0, then increases, and returns to 0 again between the points in time t1 and t2 and between the points in time t3 to t4.

Next, a change in the velocity (hereinafter, referred to as "horizontal velocity Vh") of the user's body in the horizontal direction, that is, acceleration and deceleration in the travel direction will be described.

During walking, the velocity of the user's body increases while the user is moving the landed foot backward as pushing the upper body forward, and decreases while the user is moving the upper body forward up to near the position of the foot after the foot that has been kicked forward lands.

In other words, the walking period PW includes a section (hereinafter, referred to as "deceleration section SR") in which the velocity decreases in the travel direction as indicated by the arrow HR, and the remaining section is a section (hereinafter, referred to as an "acceleration section SA") in which the speed increases in the travel direction as indicated by the arrow HA.

In the deceleration section SR, since the velocity decreases in the travel direction, the horizontal acceleration Ah is considered to work on the user's body in the travel direction. Meanwhile, in the acceleration section SA, since the velocity increases in the travel direction, the horizontal acceleration Ah is considered to work on the user's body in a direction opposite to the travel direction.

Further, when two consecutive steps during walking are regarded as a period, the respective parts of the body repeat a periodic motion. In other words, regardless of the carrying place (Fig. 6) of the smart phone 1 by the user, an acceleration value detected by the acceleration sensor 27 has periodicity.

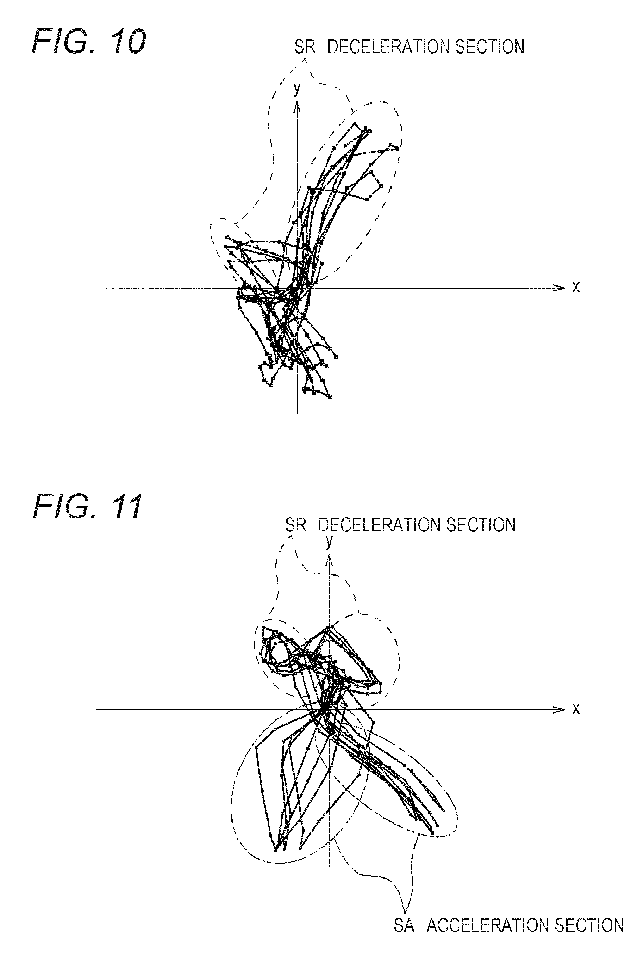

Here, the horizontal acceleration Ah obtained when the user has actually walked with the smart phone 1 has been plotted on an xy coordinate plane, and so distribution characteristics illustrated in Figs. 10 to 12 have been obtained.

Figs. 10 to 12 illustrate distribution characteristics when the breast pocket W1, the jacket right pocket W2, and the trouser hip pocket W3 are the carrying place (Fig. 6) of the smart phone 1, and the user has walked in an almost northern direction. Figs. 10 to Fig. 12 are obtained by clipping a part of about 4 seconds from the horizontal acceleration Ah obtained when the user has walked during a certain period of time and connecting points which are temporally consecutive with each other by lines. In addition, since a detection period is 50 [Hz], an interval between consecutive plots is 0.02 [s].

In Figs. 10 to 12, since it is understood that the pedestrian's travel orientation is determined as being the north, that is, the positive direction of the y axis, plots mainly distributed in a first quadrant and a second quadrant in which y has a positive value are considered to correspond to the deceleration section SR, and plots mainly distributed in a third quadrant and a four quadrant in which y has a negative value are considered to correspond to the acceleration section SA.

Further, when a temporal change, that is, a state of a line connecting plots is considered, in Figs. 10 to 12, a portion surrounded by a dotted line is considered to correspond to the deceleration section SR, and a portion surrounded by an alternate long and short dash line is considered to correspond to the acceleration section SA.

Here, although the user's travel orientation is unknown, when a distribution of the portion of the horizontal acceleration Ah corresponding to the deceleration section SR is distinguished from a distribution of the portion of the horizontal acceleration Ah corresponding to the acceleration section SA in the xy plane coordinates, it is possible to infer the user's travel orientation based on a relation between the distribution of the horizontal acceleration Ah and the user's travel orientation in Figs. 10 to 12.

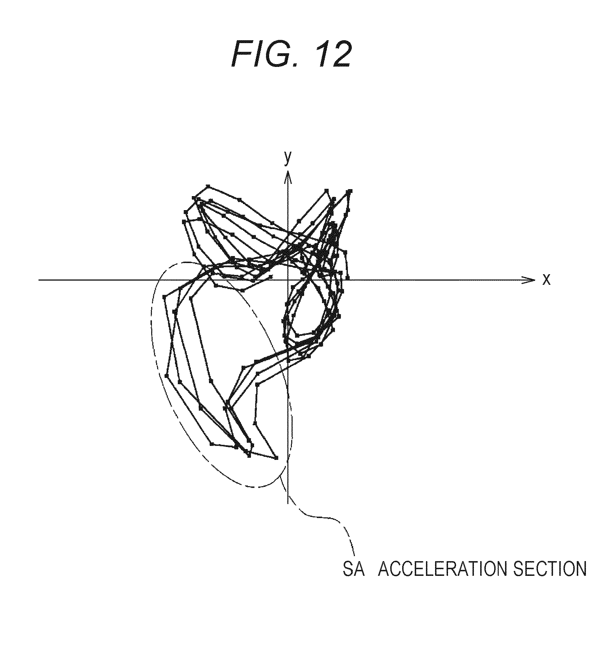

Meanwhile, in Fig. 11, both the deceleration section SR and the acceleration section SA are separated to be relatively easily understood. However, in Fig. 10, a portion corresponding to the acceleration section SA is not notably appeared, and in Fig. 12, a portion corresponding to the deceleration section SR is not notably appeared. Further, it can be understood from Fig. 12 that when humans walk, humans move as the waist rotates, and influence thereof may be reflected in the acceleration.

In other words, a characteristic of the horizontal acceleration Ah significantly changes depends on the carrying place of the smart phone 1 by the user.

For this reason, in order to calculate the user's travel orientation based on the distribution of the horizontal acceleration Ah, it is consequential to determine which of the acceleration section SA and the deceleration section SR each obtained acceleration belongs to, that is, which of the deceleration section SR and the acceleration section SA the horizontal acceleration Ah is classified into.

In this regard, in the following, in order to finally obtain the travel orientation, a technique of classifying the horizontal acceleration Ah into the deceleration section SR and the acceleration section SA will be described.

[1-3-5. Calculation of walking period]

Here, a technique of calculating the user's walking period PW based on the acceleration A3 as an advance preparation for classifying the horizontal acceleration Ah into the deceleration section SR and the acceleration section SA will be described.

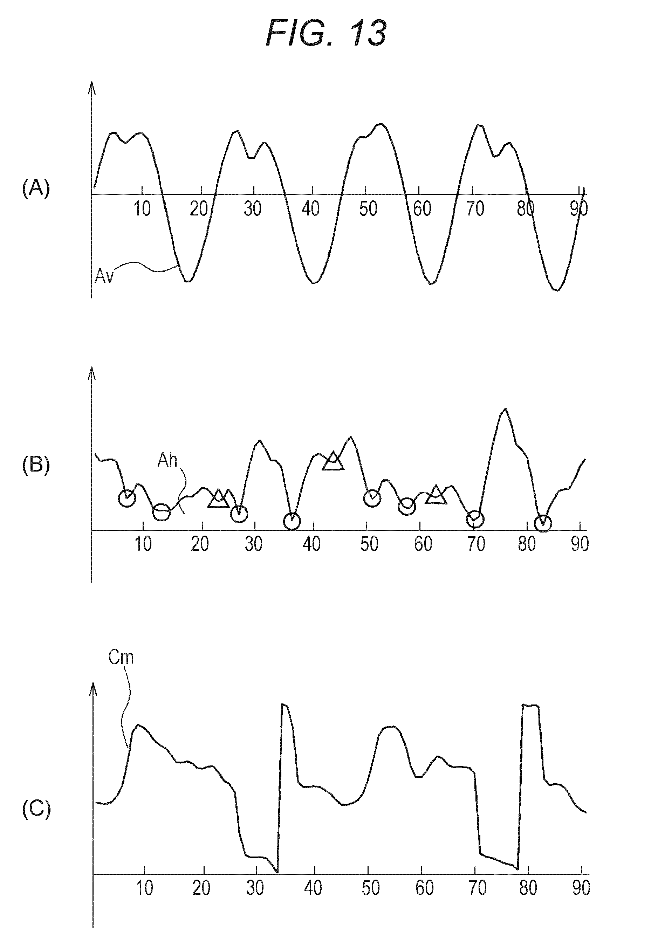

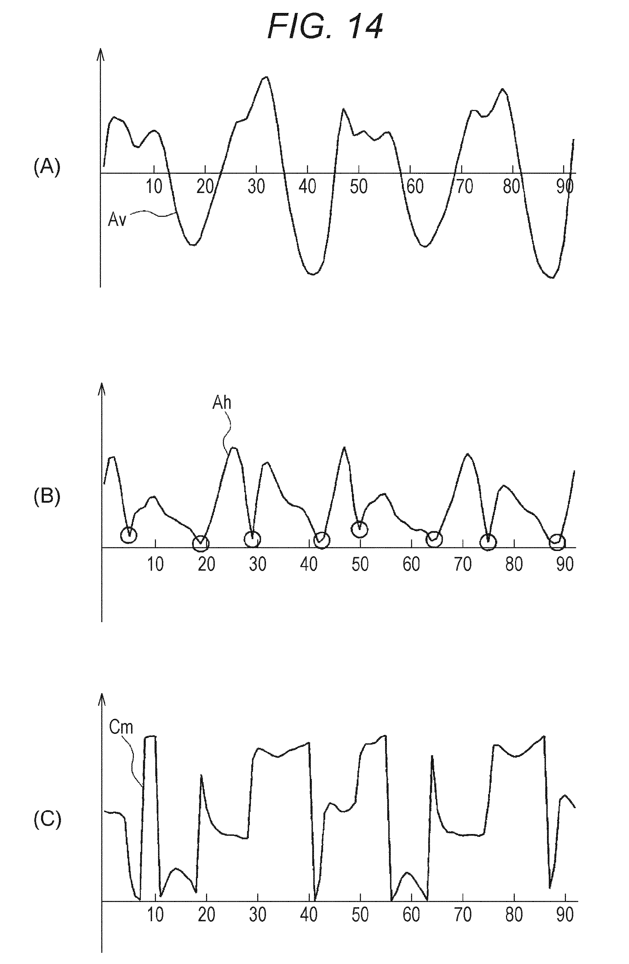

The user has actually walked in the state in which the smart phone 1 is put in the breast pocket W1, the jacket right pocket W2, and the trouser hip pocket W3 serving as the carrying place (Fig. 6), and so characteristic curves illustrated in Figs. 13 to 15 have been obtained.

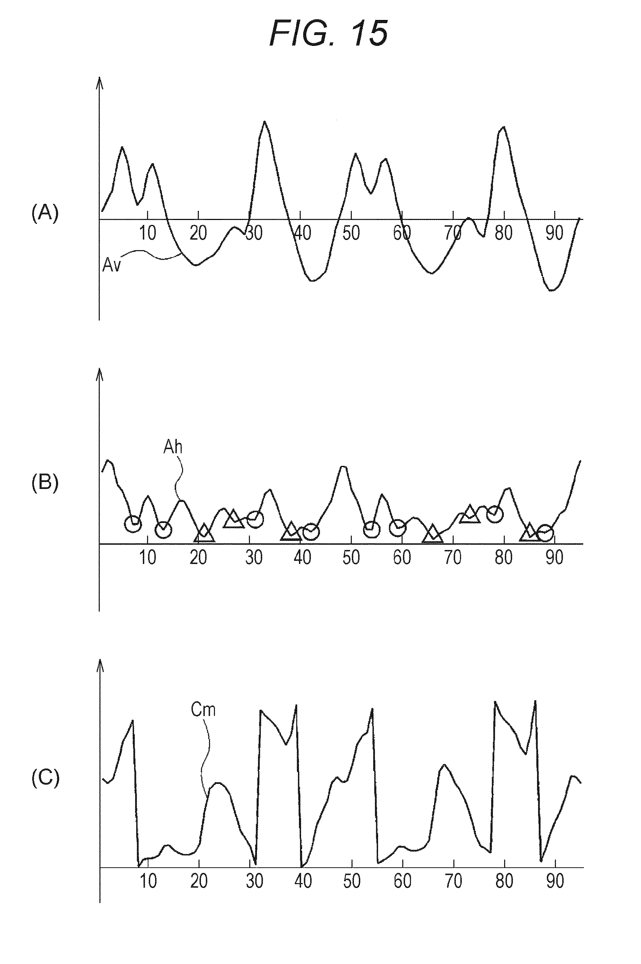

Figs. 13(A) and 15(A) represent the vertical acceleration Av, and Figs. 13(B) and 15(B) represent the horizontal acceleration Ah. Figs. 13(C) and 15(C) illustrate an orientation angle Cm (Fig. 7(C)) when an orientation represented by the horizontal acceleration Ah is expressed by polar coordinates in which "0" is set as the northern direction.

In addition, in Figs. 13 to 15, a horizontal axis represent the number of samples by an A/D converting circuit 27A connected to the acceleration sensor 27, and since a sampling rate thereof is 50 [Hz], 1 sample corresponds to 0.02 [s].

When Fig. 9 is compared with Figs. 13 to 15, it can be understood that the waveform of the actual vertical acceleration Av is not necessarily a sinusoidal waveform such as an illustrated waveform (Fig. 9). Further, it can be understood that the waveform of the actual vertical acceleration Av significantly differs according to the carrying place of the smart phone 1.

For example, when the breast pocket W1 is the carrying place, in the waveform of the vertical acceleration Av, a waveform by the right foot is relatively similar to a waveform by the left foot. On the other hand, when the jacket right pocket W2 or the trouser hip pocket W3 is the carrying place, in the waveform of the vertical acceleration Av, a waveform by the right foot and a waveform by the left foot (that is, waveforms corresponding to two consecutive steps) are significantly different from each other.

However, in the vertical acceleration Av, a relatively similar waveform is repeatedly appeared with the walking period PW corresponding to two steps regardless of the carrying place. This coincides with the fact that in the illustrated waveform (Fig. 9), during the walking period PW, that is, while the user is taking two steps forward by walking, each of the maximum value and the minimum value appears twice in the vertical acceleration Av twice.

In this regard, in view of the fact that a waveform has periodicity on the vertical acceleration Av but significantly differs according to the carrying place, a period of time (a phase difference) until a waveform similar to a waveform of a certain portion appears again has been obtained without using a threshold value or the like.

Specifically, an arbitrary portion of the vertical acceleration Av has been used as a function f(t), and an auto-correlation degree of the function f(t) has been represented by an auto-correlation evaluation function g(t) expressed by the following Equation (7).

$$g(t) = \sum |f(n) - f(n+t)| \qquad \cdots (7)$$

The auto-correlation evaluation function g(t) decreases in value as the auto-correlation degree increases, and has a value (evaluation value) "0" when perfect matching is made. A constant T represents a window size, that is, a range of a phase difference t used to calculate the auto-correlation degree. The phase difference t represents the number of samples in Figs. 13 to 15, and corresponds to a time difference.

Further, the value of the auto-correlation evaluation function g(t) has been sequentially calculated as an auto-correlation evaluation value while gradually increasing the phase difference t from a 1 sample (that is, 0.02 [s]), and a relation with the phase difference t has been represented by a graph.

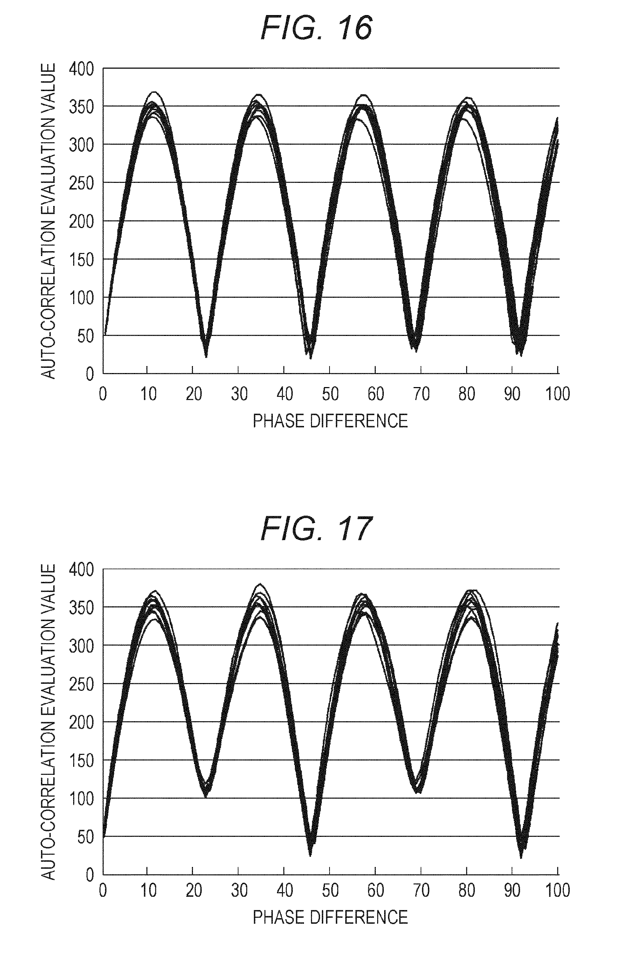

Figs. 16 to 20 illustrate graphs of the auto-correlation evaluation value on the phase difference t when the breast pocket W1, the jacket right pocket W2, the trouser hip pocket W3, the user's hand W4, and the bag W5 are the carrying place (Fig. 6). In addition, in Figs. 16 to 20, a plurality of calculation results obtained by slightly changing a portion employed as the function f(t) in the vertical acceleration Av are illustrated in the overlapping manner.

In all cases of Figs. 16 to 20, in most overlapped waveforms, a minimum value appears each time the phase difference t is about 20 to 24 samples (about at intervals of about 0.4 to 0.48 [s]), that is, at intervals of a period of time corresponding to the user's one step.

Further, in the first step, depending on the carrying place, even though there are cases when the minimum value may be extremely small and the minimum value may not be very extremely, in the second step, regardless of the carrying place, the minimum value has an extremely small value.

Considering the principle that the left and right feet alternately move for walking, the first step is low in correlation since a waveform is based on the other foot, and the second step is high in correlation since a waveform is based on the same foot.

In this regard, it is preferable to set the phase difference t at which a second minimum value appears in the auto-correlation evaluation value obtained by the auto-correlation evaluation function g(t) as the walking period PW without particularly deciding a calculation start timing or the like in the walking period PW.

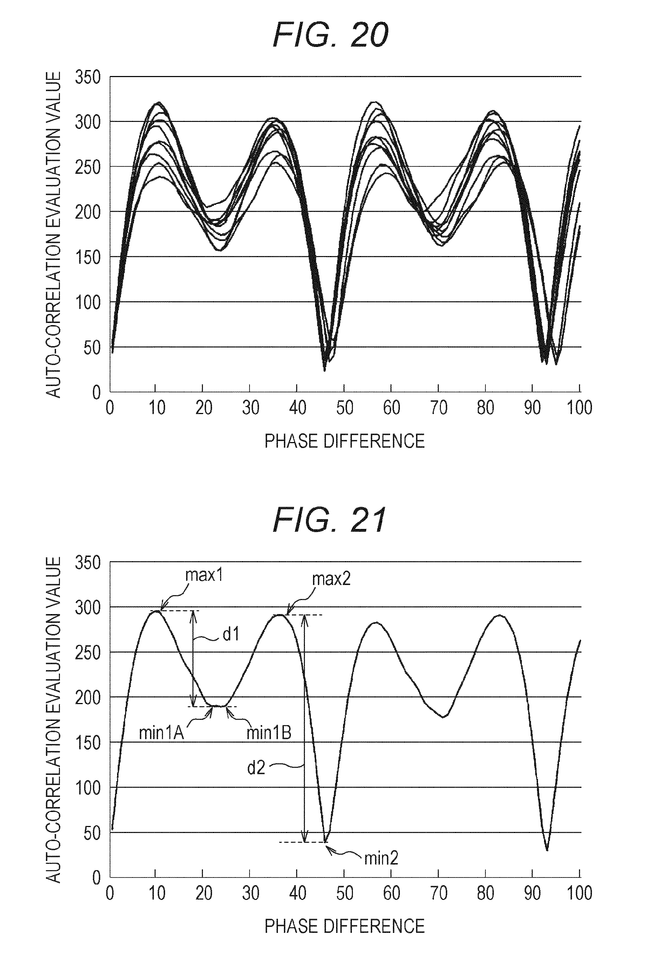

Here, Fig. 21 illustrates a waveform of one selected from among the auto-correlation evaluation values illustrated in Fig. 20. In Fig. 21, when the phase difference t is about 20 to 24 samples, two minimum values min1A and min1B appear, and thereafter, when the phase difference t is about 46 samples, a third minimum value min2 appears.

For this reason, in the case of the auto-correlation evaluation value illustrated in Fig. 21, if the phase difference t at which the second minimum value appears is simply employed, the phase difference t at which the minimum value min1B corresponding to the first step appears is erroneously employed rather than the phase difference t corresponding to the minimum value min2 which is desired to be originally employed.

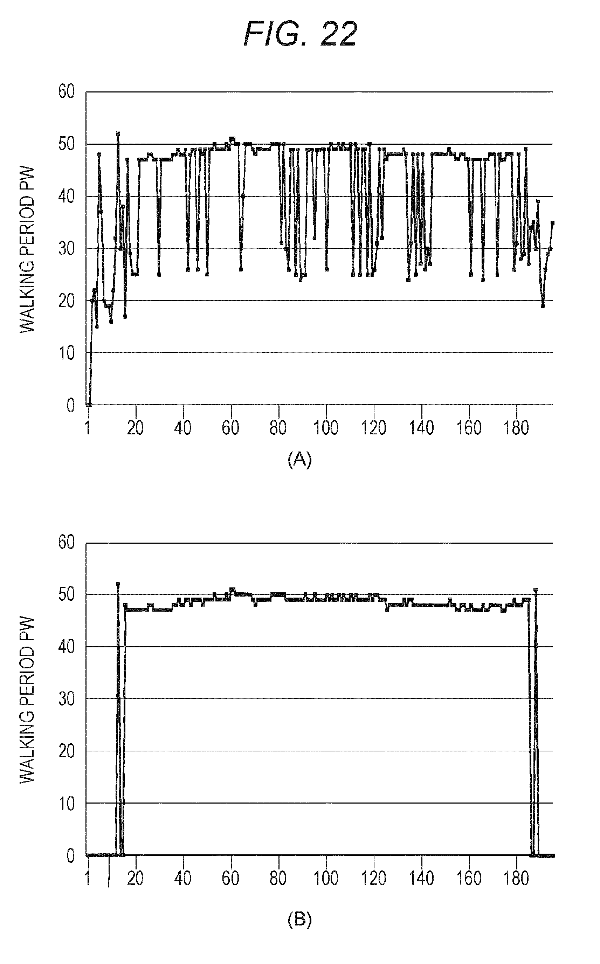

As described above, when the phase difference t at which the second minimum value appears is simply used as the walking period PW, a value (about 24 to 32 samples) corresponding to the first step as well as near a value (about 46 to 50 samples) corresponding to the correct second step are erroneously detected at a relatively high frequency as illustrated in Fig. 22(A).

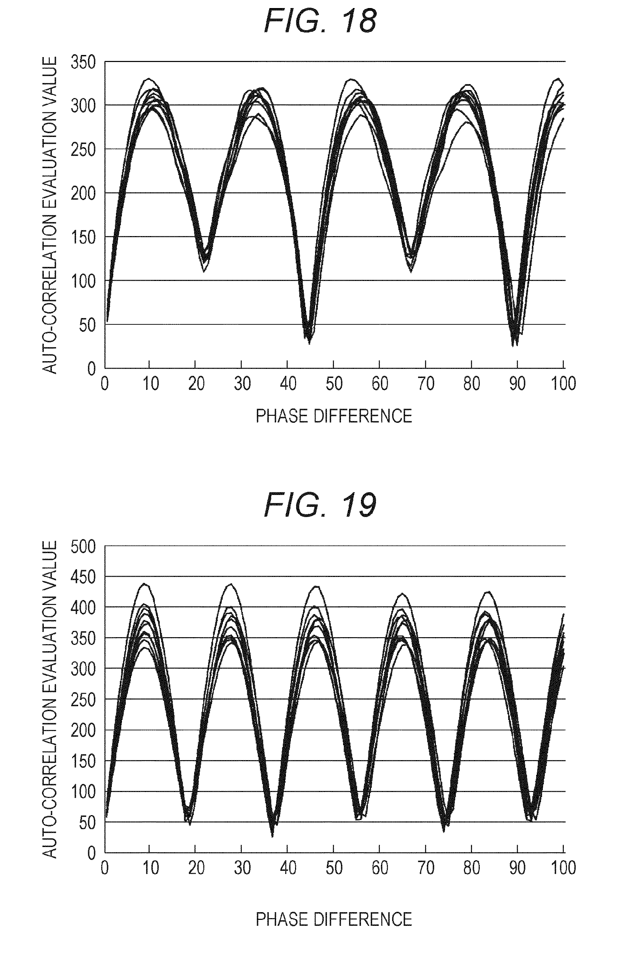

Here, considering a difference between each minimum value in Fig. 21 and a maximum value appeared immediately before the minimum value, a difference d1 between a maximum value max1 and a minimum value min1A (or min1B) in the first step is relatively small. Meanwhile, a difference d2 between a maximum value max2 and a minimum value min2 in the second step is relatively large. Further, as illustrated in Figs. 16 and 19, the difference d1 in the first step may be almost equal to the difference d2 in the second step and have a relatively large value, depending on the carrying place.

In this regard, the first minimum value min1 is assumed to be employed when the following Equation (8) is satisfied, and the second minimum value min2 is assumed to be employed when the following Equation (9) is satisfied.

$$min1 \leq max1 \times 0.9 \qquad \dots (8)$$

$$min2 \leq max2 \times 0.5 \qquad \dots (9)$$

Here, in light of the fact that the maximum values max1 and max2 are likely to appear twice or more during a period of time corresponding to a first step, maximum values that appear immediately before the minimum values min1 and min2 which are desired to be employed are used.

Here, the coefficient "0.9" in Equation (8) has been decided so that the minimum value can be reliably detected as the first step although the minimum value is a relatively large value in light of the fact that in the vertical acceleration Av at the time of walking, correlation with the other foot is unlikely to be so high.

Further, the coefficient "0.5" in Equation (9) has been decided as a value smaller than the coefficient "0.9" in Equation (8) so that the first step can be detected as the second step when the minimum value is reduced to some extent, that is, one of a plurality of minimum values generated by the first step which is the other foot is not erroneously detected as the second step in light of the fact that in the vertical acceleration Av at the time of walking, correlation with the same foot is relatively high.

As the above employment conditions are applied, it has been confirmed that a value (about 46 to 50 samples) corresponding to a second step is properly used as the walking period PW in the entire range excluding about 15 samples from the beginning as illustrated in Fig. 22(A) and Fig. 22(B) corresponding thereto.

Based on the above, the walking period calculating unit 45 (Fig. 4) of the travel orientation calculating unit 33 sets an arbitrary portion of the vertical acceleration A2z supplied from the vertical direction detecting unit 41B as the function f(t), and calculates the auto-correlation evaluation value according to Equation (7).

Then, the walking period calculating unit 45 employs the minimum values min1 and min2 that satisfy Equations (8) and (9), and uses the phase difference t at which the minimum value min2 appears as the walking period PW.

As described above, the walking period calculating unit 45 detects the phase difference t at which the auto-correlation degree for the vertical acceleration A2z is second highest as the walking period PW corresponding to the two steps based on the vertical acceleration A2z representing a periodic waveform according to the user's walking.

[1-3-6. Selection of phase reference point]

Next, a phase (hereinafter, referred to as a "phase reference point PS") to be used as a reference when the horizontal acceleration Ah is delimited in units of the walking periods PW as advance preparation for classifying the horizontal acceleration Ah into the deceleration section SR or the acceleration section SA will be described.

Referring back to Fig. 9, the deceleration section SR at the time of walking appears after the vertical acceleration Av becomes a maximum value. For this reason, the phase reference point PS is considered to be decided based on the waveform of the vertical acceleration Av. Further, as a phase which is easily specified in a waveform, there is a phase (hereinafter, referred to as a "zero-cross point") to cross zero when easiness of detection or the like is considered.

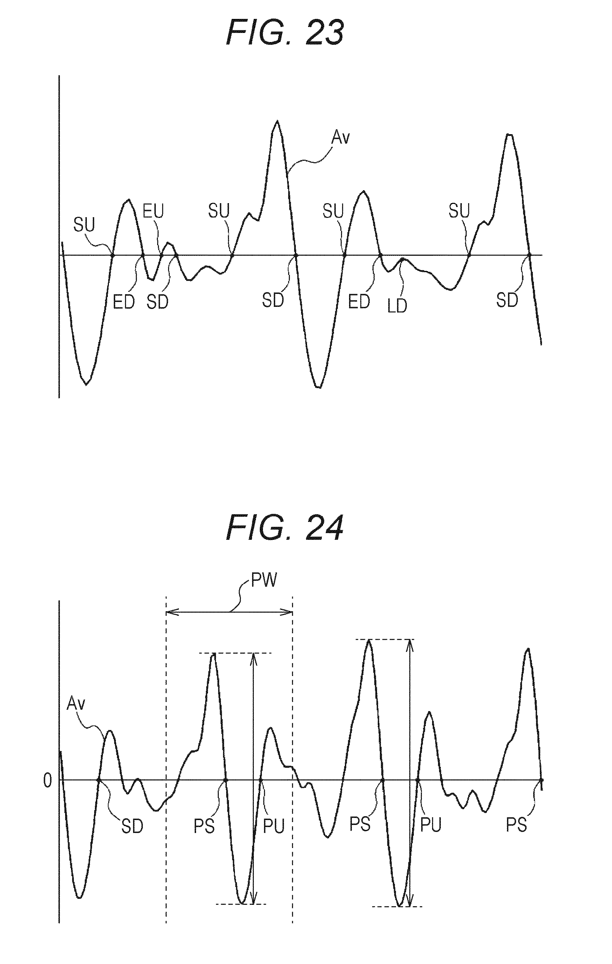

Fig. 23 illustrates a waveform corresponding to arbitrary 4 steps (that is, corresponding to the two walking periods PW) in the vertical acceleration Av obtained when the carrying place (Fig. 6) of the smart phone 1 is the bag W5.

Originally, during a period of time corresponding to 4 steps, that is, during the two walking periods PW, a maximum point and a minimum point appear four times, and four zero-cross points (hereinafter, referred to as "upward zero-cross points" and "downward zero-cross points," respectively) that change from negative to positive or from positive to negative exist.

However, in Fig. 23, in addition to the appropriate upward zero-cross point SU and the appropriate downward zero-cross point SD, an extra upward zero-cross point EU and an extra downward zero-cross point ED appear. Further, a point (which is referred to as a "disappearing downward zero-cross point LD" for the sake of convenience) at which a downward zero-cross point which should originally appear disappears exists as well.

For this reason, it is desirable to employ a zero-cross point that reliably appears in each walking period PW without disappearing and is clearly distinguished from an extra zero-cross point as the phase reference point PS.

Here, referring back to Fig. 23, it can be understood that at a rate of once per two steps, there is a point at which a relatively large maximum value and a relatively small minimum value consecutively appear, that is, a point at which a difference between a maximum value and a minimum value is relatively large. Referring back to Figs. 13 to 15, similarly, at a rate of once per at least two steps, there is a point at which a difference between a maximum value and a minimum value is relatively large.

In this regard, for the vertical acceleration Av, a range corresponding to the walking period PW is considered, and a point at which a difference between a maximum value included in the range and a minimum value immediately thereafter is maximum is considered to be used as a reference of the walking period PW.

Based on the above, the walking period calculating unit 45 (Fig. 4) of the travel orientation calculating unit 33 extracts a range corresponding to the walking period PW from an arbitrary point in time in the vertical acceleration Av supplied from the BPF 44 as illustrated in Fig. 24. Further, Fig. 24 illustrates the vertical acceleration Av corresponding to 6 steps, that is, the three walking periods PW.

Then, the walking period calculating unit 45 calculates a difference between each maximum value included in the range and a minimum value immediately thereafter, and employs a downward zero-cross point interposed between the maximum point and the minimum point at which the difference is maximum as the phase reference point PS.

Further, the walking period calculating unit 45 employs an upward zero-cross point that appears following the downward zero-cross point employed as the phase reference point PS as a reference upward zero-cross point PU. In addition, the reference upward zero-cross point PU is used in a subsequent process.

Then, the walking period calculating unit 45 supplies the phase reference point PS to the acceleration/deceleration section switching phase learning unit 46, and supplies the phase reference point PS and the reference upward zero-cross point PU to the acceleration/deceleration section estimating unit 47.

As described above, the walking period calculating unit 45 employs the downward zero-cross point interposed between the maximum point and the minimum point at which a difference between a maximum value and a minimum value appearing immediately thereafter is maximum in a portion of the vertical acceleration Av corresponding to the walking period PW as the phase reference point PS.

[1-3-7. Detection of acceleration/deceleration switching phase]

Next, a technique of detecting a point at which switching between the acceleration section SA and the deceleration section SR is performed in the walking period PW having the phase reference point PS as a starting point will be described.

As illustrated in Fig. 9, during the walking period PW, that is, while the user is taking two steps by walking, the deceleration section SR appears twice. This means that during the walking period PW, switching between the acceleration section SA and the deceleration section SR is performed four times.

Meanwhile, when switching between the acceleration section SA and the deceleration section SR is performed, the horizontal acceleration Ah is likely to have a minimum value in principle. In other words, a minimum point (hereinafter, referred to as an "acceleration/deceleration switching point CH") caused by switching between the acceleration section SA and the deceleration section SR is considered to appear four times in the horizontal acceleration Ah during the walking period PW.

In this regard, referring back to Figs. 13 to 15, it can be understood that minimum points (hereinafter, referred to as "other factor points OT" which are indicated by triangular marks in Figs. 13 to 15) by other factors as well as the acceleration/deceleration switching points CH (which are indicated by circular marks in Figs. 13 to 15) appear in the horizontal acceleration Ah.

For this reason, in order to detect the acceleration section SA and the deceleration section SR based on the minimum point appearing in the horizontal acceleration Ah, the acceleration/deceleration switching point CH needs to be appropriately selected from among the minimum points.

In this regard, a technique of learning a phase (hereinafter, referred to as an "acceleration/deceleration switching phase PC") corresponding to the acceleration/deceleration switching point CH based on a phase at which the minimum point appears in the horizontal acceleration Ah through a statistical technique will be described.

As a concrete process, the horizontal acceleration Ah is delimited at each phase reference point PS (that is, in units of the walking periods PW), phase normalization is performed using the phase reference point PS as the starting point, the frequency of appearance (a cumulative value) of the minimum point in each walking period PW is calculated for each phase.

Further, when switching between acceleration and deceleration is performed, the orientation angle Cm is considered to significantly vary. In other words, when the minimum point appears in the horizontal acceleration Ah, the minimum point is likely to be the other factor point OT unless a change in the orientation angle Cm is so large. In this case, it is desirable to exclude this phase from the statistical process.

In this regard, when five or more minimum points appear within the single walking period PW, phases at the four points are set as a cumulative addition target in the descending order of the orientation changes at that time, specifically, the descending order of the differential values of the orientation angle Cm.

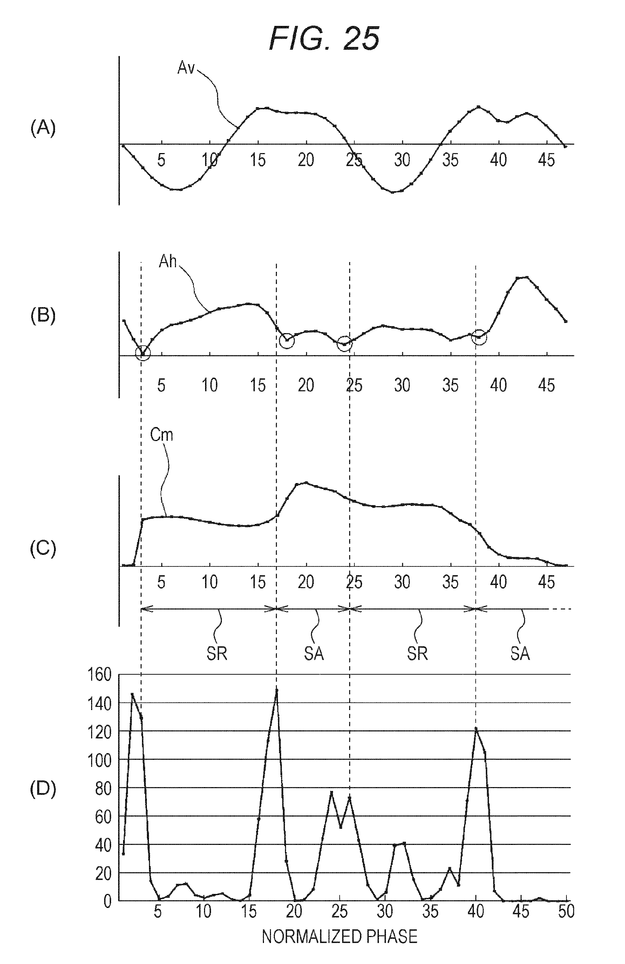

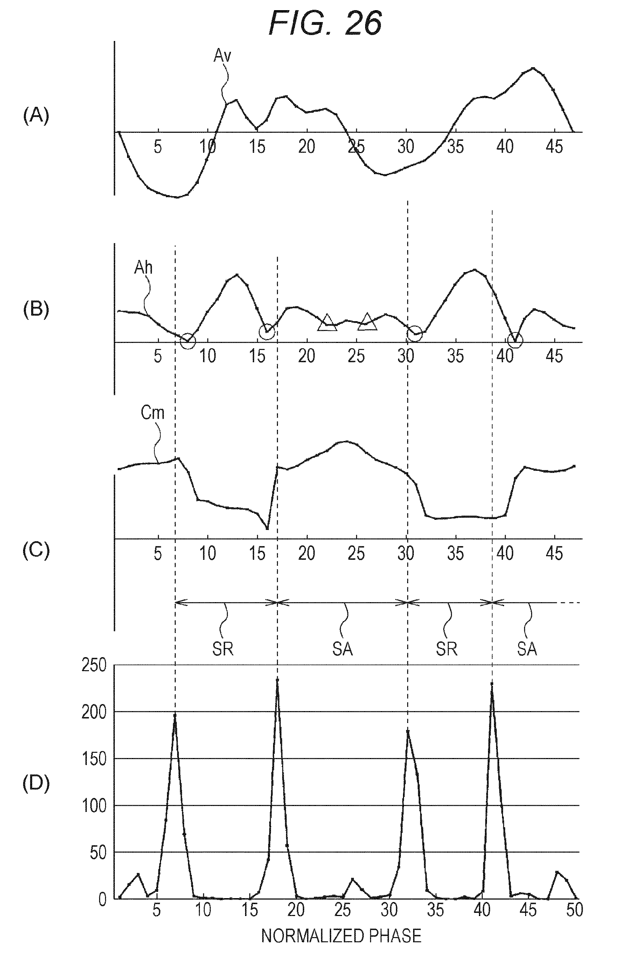

According to this policy, when the breast pocket W1 and the jacket right pocket W2 are the carrying place (Fig. 6) of the smart phone 1, the frequency of appearance of the minimum point has been added up for each case, and so graphs illustrated in Figs. 25(D) and Fig.26(D) have been obtained.

Figs. 25 (A) to 25(C) and Figs. 26 (A) to 26(C) illustrate exemplary waveforms of the vertical acceleration Av, the horizontal acceleration Ah, and the orientation angle Cm. For the horizontal acceleration Ah, the known acceleration/deceleration switching point CH (which is indicated by a circular mark in the drawings) and the other factor point OT (which is indicated by a triangular mark in the drawings) are also illustrated.

It can be understood from Figs. 25 and 26 that for the breast pocket W1 and the jacket right pocket W2, a peak which is high in the frequency of appearance of the minimum point is formed near a phase corresponding to the acceleration/deceleration switching point CH, but at the remaining phases, the frequency of appearance of the minimum point is low, and a peak is hardly formed.

This means that among phases at which a peak is formed, four points can be employed as the acceleration/deceleration switching phase PC in the descending order of the frequency of appearance of the minimum point.

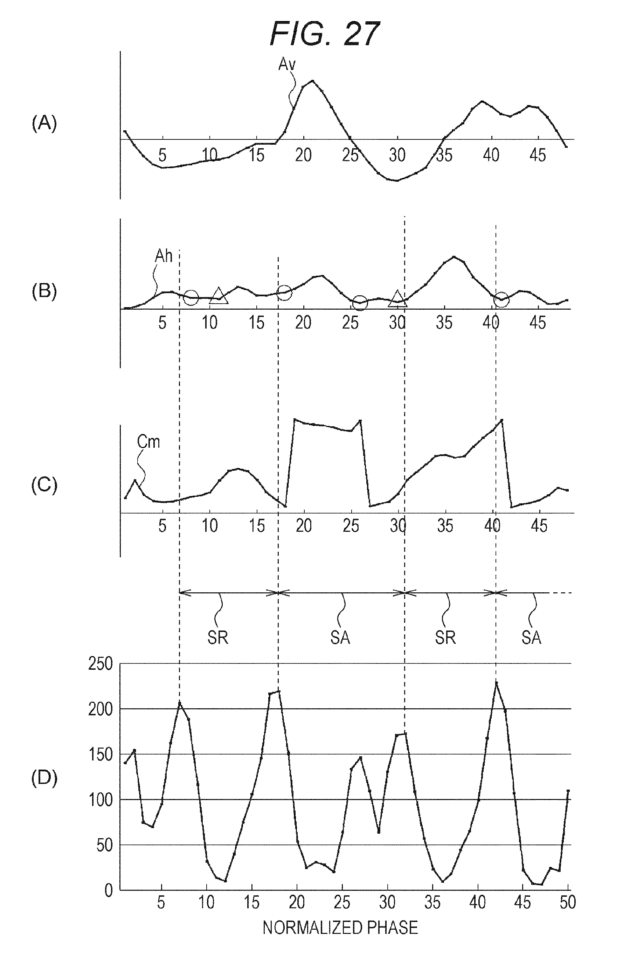

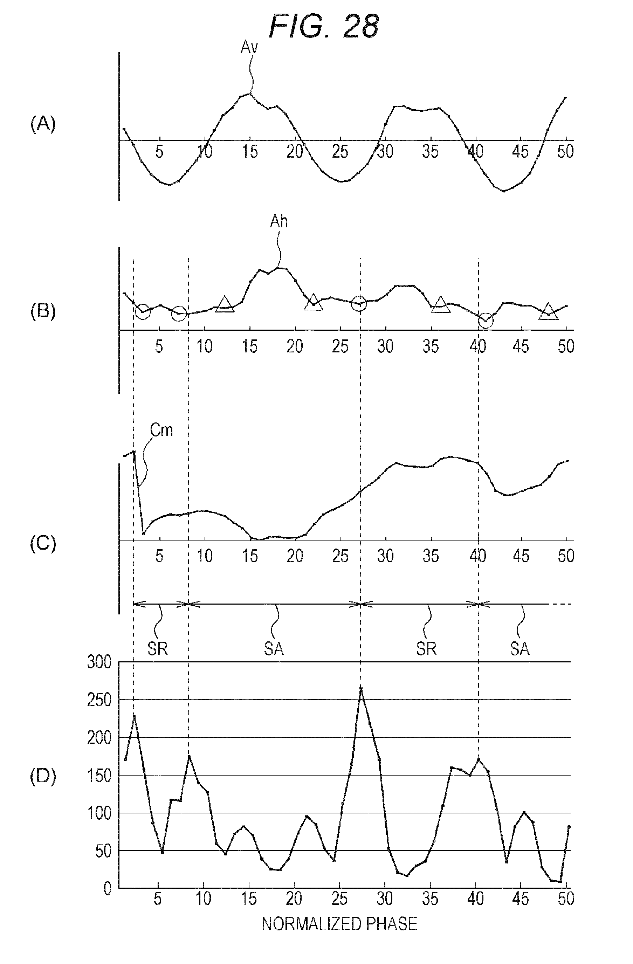

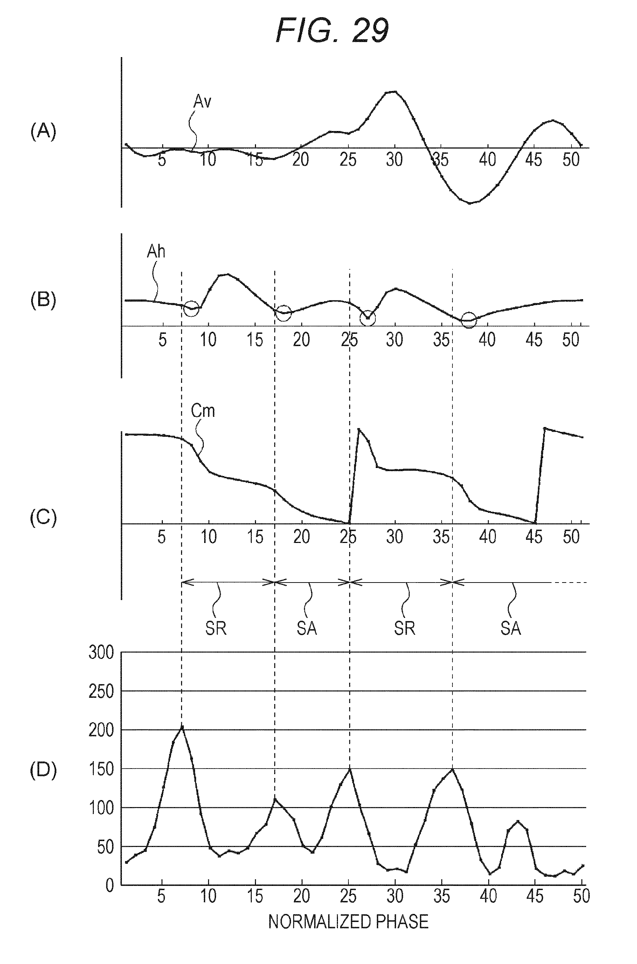

Next, when the trouser hip pocket W3, the user's hand W4, and the bag W5 are the carrying place (Fig. 6) of the smart phone 1, similarly, the frequency of appearance of the minimum point has been added up, and so graphs illustrated in Figs. 27(D), 28(D), and Fig.29(D) have been obtained.

Figs. 27(A) to 27(C), Figs. 28(A) to 28(C), and Figs. 29(A) to 29(C) illustrate exemplary waveforms of the vertical acceleration Av, the horizontal acceleration Ah, and the orientation angle Cm, similarly to Figs. 25(A) to 25(C) and Figs. 26 (A) to 26(C).

It can be understood from Figs. 27, 28, and 29 that for the trouser hip pocket W3, the user's hand W4, and the bag W5, a peak that is slightly high in the frequency of appearance of the minimum point is formed near a phase corresponding to the acceleration/deceleration switching point CH. However, at the remaining phases, there is a point at which a peak which is high in the frequency of appearance of the minimum point is formed.

Particularly, in the case of the trouser hip pocket W3 (Fig. 27), peaks formed at other phases are higher than peaks formed at phases other than the acceleration/deceleration switching point CH (that is, higher in the frequency of appearance).

This means that it is difficult to properly select the acceleration/deceleration switching phase PC only by employing four points from among phases at which a peak is formed in the descending order of the frequency of appearance of the minimum point.

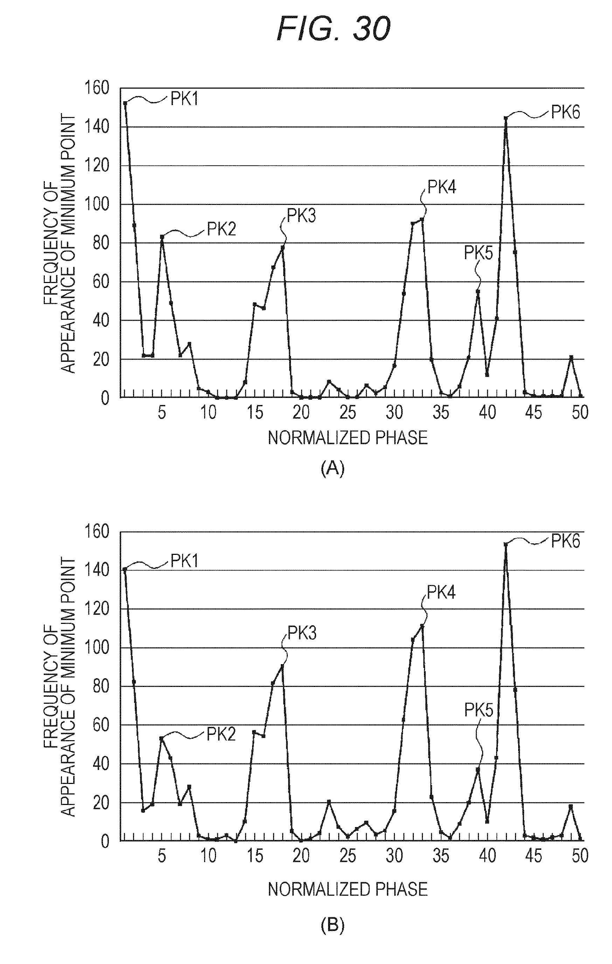

Here, the trouser hip pocket W3 has been used as the carrying place (Fig. 6) of the smart phone 1, and a cumulative value of phases at which the minimum point appears in the horizontal acceleration Ah in each walking period PW has been calculated again based on data different from the data used in Fig. 27, and so a graph illustrated in Fig. 30(A) has been obtained.

In Fig. 30(A), similarly to Fig. 27(B), 6 points, that is, 6 peaks which are high in the frequency of appearance of the minimum point appear. Here, the 6 peaks are peaks PK1, PK2, PK3, PK4, PK5, and PK6 in the phase order.

The peaks PK1, PK3, PK4, and PK6 correspond to the acceleration/deceleration switching point CH, and the remaining peaks PK2 and PK5 correspond to the other factor point OT. Further, when the respective peaks are compared in terms of the magnitude, the peaks PK1, PK6, PK4, PK2, PK3, and PK5 decrease in the amplitude in the described order. In other words, in this case, similarly to Fig. 27, it is difficult to properly select the acceleration/deceleration switching point CH only by employing four points in the descending order of the frequency of appearance of the minimum point.

Here, in the peaks PK1 and PK2, a phase interval between both peaks is about 4 samples, that is, about 0.08 [s]. However, when the user of the smart phone 1 actually walks, it is difficult to perform switching between acceleration and deceleration in the horizontal direction in a short period of time of mere 0.08 [s].

In this regard, when a cumulative value of phases at which the minimum point appears in the horizontal acceleration Ah is calculated, a phase which is too short in an interval with a phase already employed as the cumulative addition in each walking period PW, that is, a phase in which the interval is a tenth (1/10) of the walking period PW or less is excluded from a subsequent employment candidate in the corresponding walking period PW. Hereinafter, this process is referred to as an adjacent phase exclusion process.

Here, an interval such as a tenth (1/10) of the walking period PW has been decided in view of a minimum length of the acceleration section SA or the deceleration section SR when switching between acceleration and deceleration is performed in a relative short period of time, for example, due to a reason that the pedestrian's pace becomes narrow due to a status of a road surface or the like.

The frequency of appearance of the minimum point has been added up while performing the adjacent phase exclusion process, the peaks PK6, PK1, PK4, PK3, PK2, and PK5 decrease in the amplitude in the described order as illustrated in Fig. 30(A) and Fig. 30(B) corresponding thereto.

In other words, in Fig. 30(B), all phases at which peaks of four points selected in the descending order of the amplitudes appear have been selected as the acceleration/deceleration switching point CH. This means that when the frequencies of appearance of four points selected in the descending order of the orientation change degrees are added up while performing the adjacent phase exclusion process on the minimum points appearing in the horizontal acceleration Ah, phases of four points selected in the descending order among peaks to be formed can be employed as the acceleration/deceleration switching point CH as is.

In this regard, the acceleration/deceleration section switching phase learning unit 46 (Fig. 4) of the travel orientation calculating unit 33 calculates the horizontal acceleration Ah based on the acceleration A3 supplied from the vertical direction detecting unit 41B using Equation (6), and accumulates the frequency of appearance of the minimum point of each the walking period PW.

At this time, the acceleration/deceleration section switching phase learning unit 46 selects four points in the descending order of the differential values of the orientation angle Cm among the minimum points appearing in each walking period PW as the cumulative addition target, but a minimum point in which an interval with a phase already employed as the cumulative addition target is a tenth (1/10) of the walking period PW or less is excluded from the cumulative addition target in the corresponding walking period PW.

Then, the acceleration/deceleration section switching phase learning unit 46 employs phases of four points selected in the descending order of the amplitudes among a plurality of peaks appearing in an addition result of the frequency of appearance of the minimum point as the acceleration/deceleration switching phase PC, and supplies the employed phases to the acceleration/deceleration section estimating unit 47.

As described above, the acceleration/deceleration section switching phase learning unit 46 adds up the frequency of appearance of the minimum value of the horizontal acceleration Ah while performing the adjacent phase exclusion process, and detects phases of four points in the descending order of the amplitudes of the peaks as the acceleration/deceleration switching phase PC.

[1-3-8. Estimation of acceleration/deceleration section]

Next, a process (hereinafter, referred to as an "acceleration/deceleration section estimation process") of estimating whether each of sections delimited by the acceleration/deceleration switching phases PC of four points within the walking period PW is the acceleration section SA or the deceleration section SR will be described.

Referring back to the waveforms of Figs. 13 to 15 and Figs. 25 to 29, it can be understood that the maximum point often appears twice during a period of time in which the waveform of the vertical acceleration Av has a convex portion in the upper part. Further, it can also be understood that the deceleration section SR starts after the first maximum point appears.

However, when the waveform of the vertical acceleration Av has a convex portion in the upper part, the shape thereof is often corrupted, and thus it is difficult to reliably detect the first maximum point.

Here, a relation between a period of time in which the waveform of the vertical acceleration Av has a convex portion in the upper part and the deceleration section SR is considered. When the two acceleration/deceleration switching phases PC are included in this period of time, it is preferable that a section interposed between the acceleration/deceleration switching phases PC be set as the deceleration section SR. Further, when the single acceleration/deceleration switching phase PC is included in this period of time, it is preferable that a section immediately after the acceleration/deceleration switching phase PC be set as the deceleration section SR.

In summary, it is preferable the acceleration/deceleration switching phase PC first appearing after the upward zero-cross point, that is, the reference upward zero-cross point PU (Fig. 24) first appearing in the vertical acceleration Av in the walking period PW starting from the phase reference point PS be set as the starting point of the deceleration section SR.

For subsequent two steps, it is preferable to alternately switch the deceleration section SR and the acceleration section SA each time the acceleration/deceleration switching phase PC appears.

In this regard, the acceleration/deceleration section estimating unit 47 (Fig. 4) of the travel orientation calculating unit 33 is first supplied with the vertical acceleration Av from the BPF 44, supplied with the phase reference point PS and the reference upward zero-cross point PU from the walking period calculating unit 45, and further supplied with the acceleration/deceleration switching phase PC from the acceleration/deceleration section switching phase learning unit 46.

Then, the acceleration/deceleration section estimating unit 47 sets a section from the acceleration/deceleration switching phase PC first appearing after the reference upward zero-cross point PU to the acceleration/deceleration switching phase PC appearing thereafter in the walking period PW having the phase reference point PS as the starting point as the deceleration section SR.

Then, the acceleration/deceleration section estimating unit 47 sequentially estimates each section delimited at each subsequent acceleration/deceleration switching phase PC as the acceleration section SA or the deceleration section SR alternately.

Further, the acceleration/deceleration section estimating unit 47 generates acceleration/deceleration information IAR representing which of the acceleration section SA and the deceleration section SR the current point in time belongs to, and supplies the acceleration/deceleration information IAR to the travel orientation calculating unit 49.

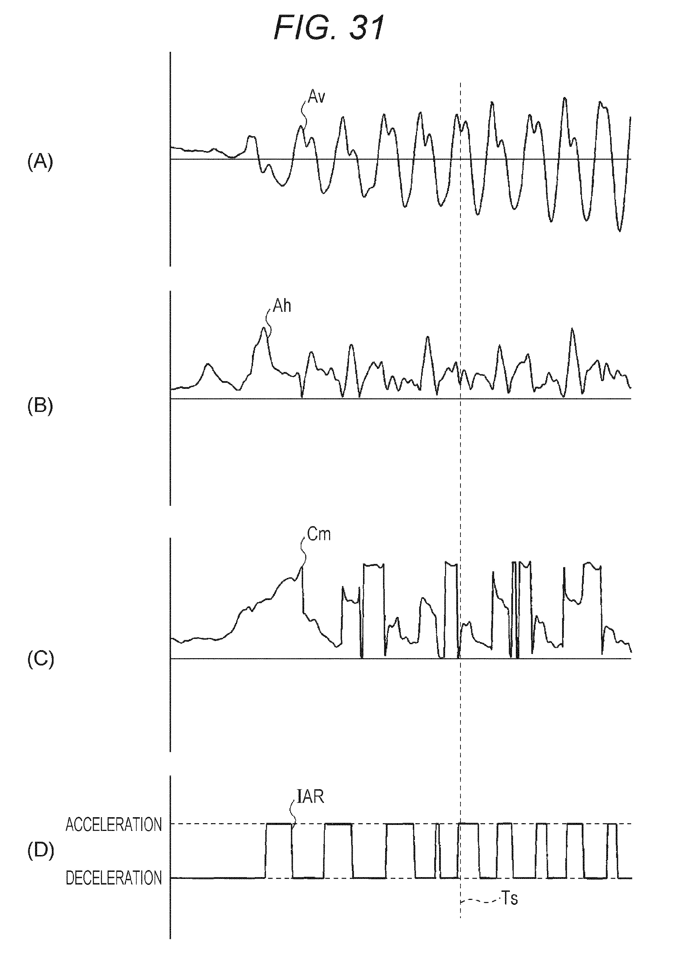

Here, an example of a result of estimating the acceleration/deceleration information IAR through the acceleration/deceleration section estimating unit 47 is illustrated in Figs. 31 to 36 together with waveforms of the vertical acceleration Av, the horizontal acceleration Ah, and the orientation angle Cm.

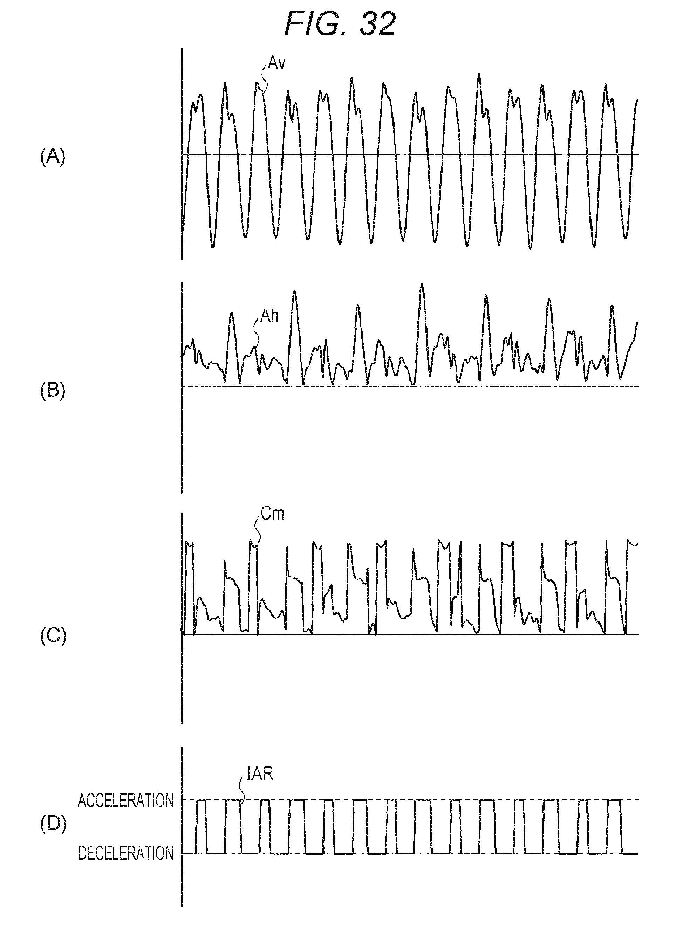

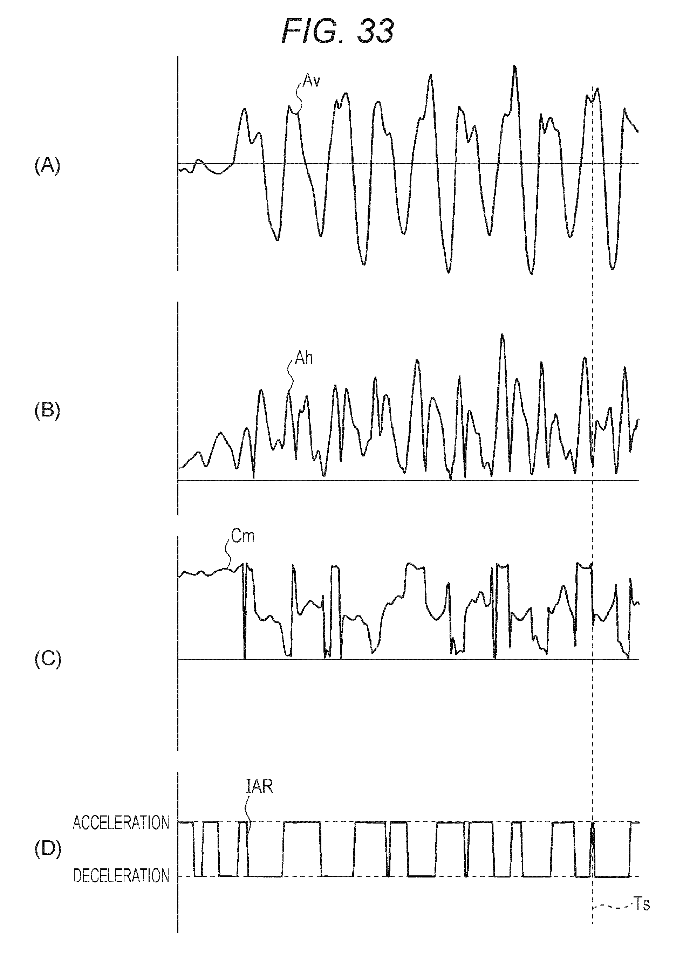

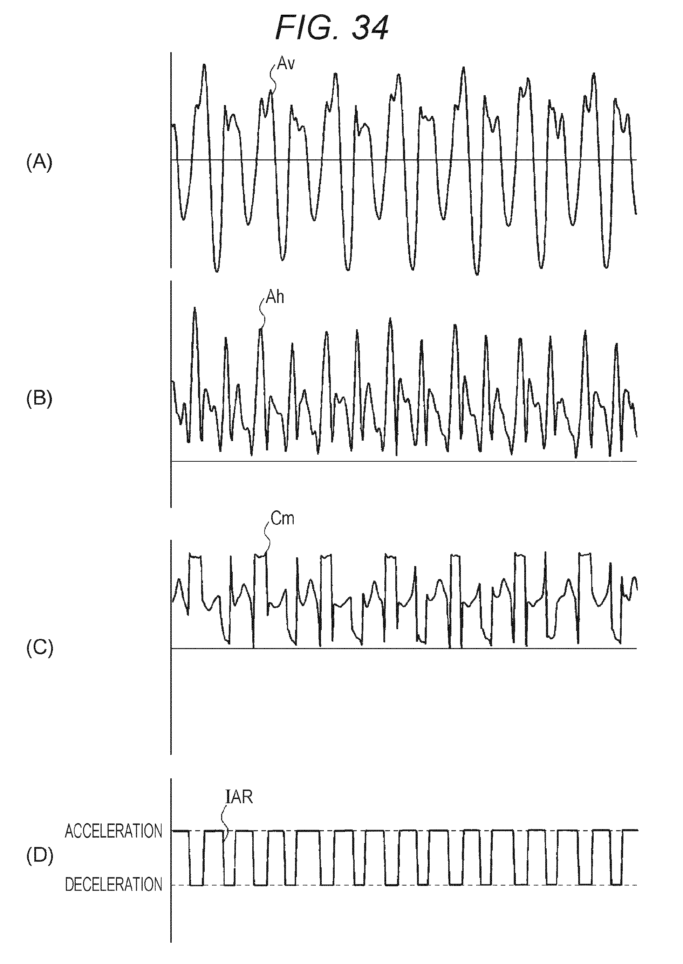

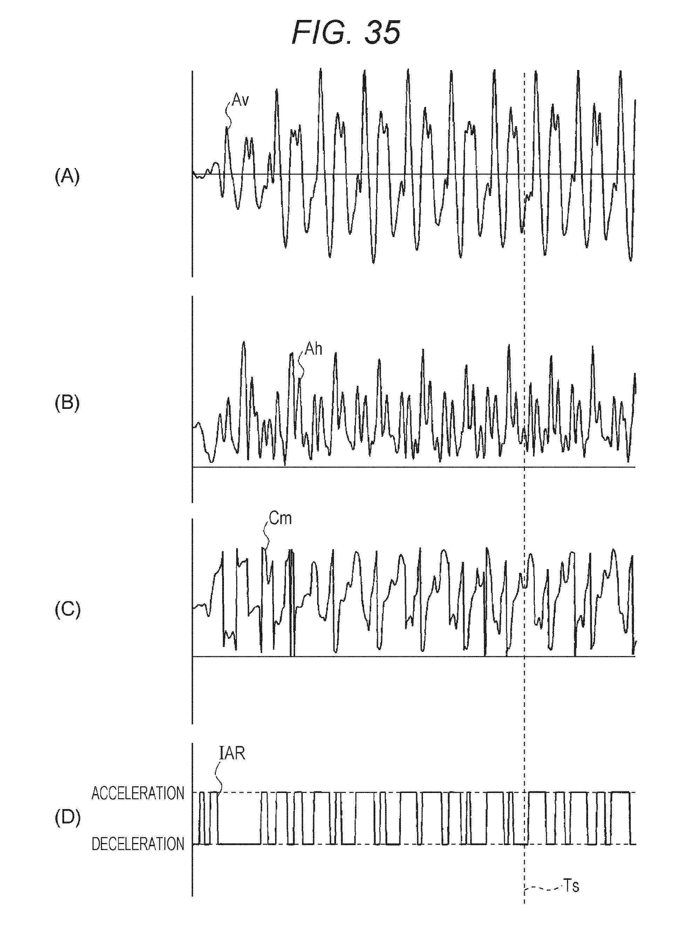

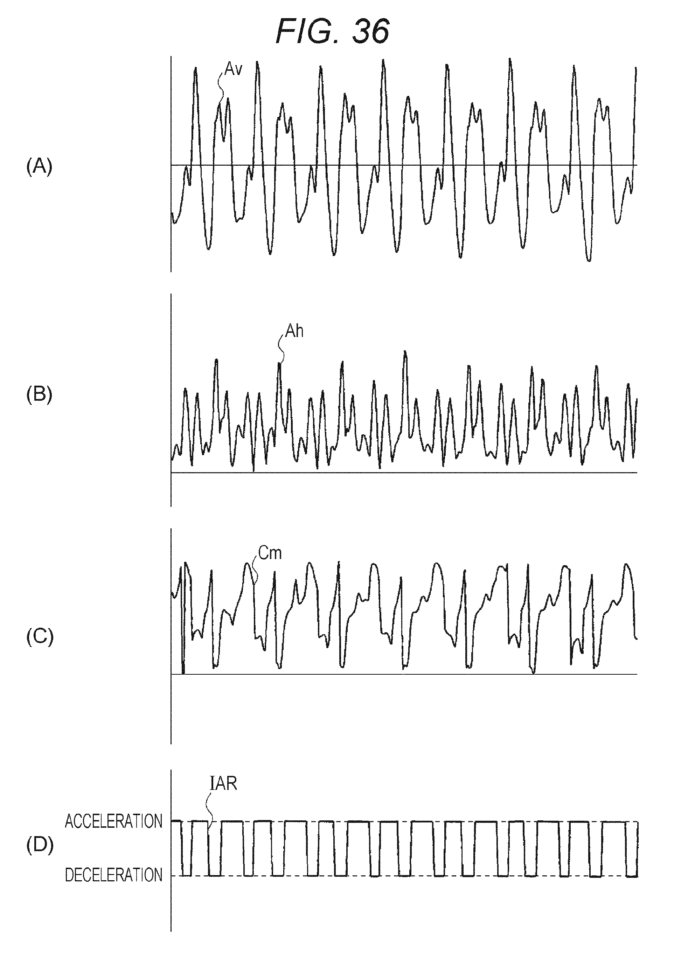

Figs. 31 and 32 illustrate waveforms starting from when walking starts and the subsequent waveforms when the breast pocket W1 is the carrying place (Fig. 6) of the smart phone 1, Figs. 33 and 34 illustrate waveforms starting from when walking starts and the subsequent waveforms when the jacket right pocket W2 is the carrying place (Fig. 6) of the smart phone 1, and Figs. 35 and 36 illustrate waveforms starting from when walking starts and the subsequent waveforms when the hip pocket W3 is the carrying place (Fig. 6) of the smart phone 1.

Further, in the waveforms of the acceleration/deceleration information IAR illustrated in Figs. 31(D) to 36(D), a high level represents the deceleration section SR, and a low level represents the acceleration section SA.

It can be understood from Figs. 31 to 36 that regardless of the carrying place of the smart phone 1, it is possible to properly estimate the deceleration section SR and the acceleration section SA after a point in time TS at which a dozen steps have been taken since walking started.

In other words, the acceleration/deceleration section estimating unit 47 sufficiently accumulates the frequency of appearance of the minimum point, and after the point in time TS at which the learning process has been performed to some extent, the detection accuracy of the acceleration/deceleration switching phase PC by the acceleration/deceleration section switching phase learning unit 46 increases, and thus it is possible to stably estimate the deceleration section SR and the acceleration section SA with a high degree of accuracy.

As described above, the acceleration/deceleration section estimating unit 47 sets the acceleration/deceleration switching phase PC first appearing after the reference upward zero-cross point PU as the starting point of the deceleration section SR, and sequentially estimates each section delimited at each subsequent acceleration/deceleration switching phase PC as the acceleration section SA or the deceleration section SR alternately as the acceleration/deceleration section estimation process.

[1-3-9. Calculation of travel orientation]

Finally, a process of calculating the user's final travel orientation based on the acceleration (A3x, A3y) in the horizontal direction and the acceleration/deceleration information IAR (that is, the estimation result of the acceleration section SA or the deceleration section SR) will be described.

As described above, when the user carrying with the smart phone 1 walks forward, the acceleration works on the smart phone 1 in the forward direction at the time of deceleration, and the acceleration works on the smart phone 1 in the backward direction at the time of acceleration. In other words, in the deceleration section SR, the direction in which the acceleration works represents the travel direction of the user, whereas in the acceleration section SA, the direction opposite to the direction in which the acceleration works represents the travel direction of the user.

Further, in the acceleration A3 of the earth coordinate system, the y axis direction is the direction of the magnetic north represented by the geomagnetic value M, but the magnetic north generally represented by geomagnetism has an error called an argument between the magnetic north and the true north represented by the axis of the Earth. The argument is known to have a value that varies according to the latitude and the longitude.

For this reason, an orientation represented by the earth coordinate system, that is, an orientation based on the magnetic north can be corrected according to an argument obtained based on the latitude and the longitude of the current position and then converted into an orientation based on the true north.

Meanwhile, in the acceleration A3, the band frequency caused by walking is extracted through the BPF 44, but an acceleration generated by a factor other than walking is considered to be included to some extent.

For this reason, when the magnitude of the acceleration A3 is relatively large, an orientation represented by the acceleration A3 is in a relatively high proportion of the acceleration caused by walking, and thus considered to be high in the accuracy of representing the user's travel orientation or an orientation opposite thereto.

However, when the magnitude of the acceleration A3 is relatively small, an orientation represented by the acceleration A3 is in a relatively high proportion of the acceleration caused by a factor other than walking, and thus considered to be low in the accuracy of representing the user's travel orientation or an orientation opposite thereto.

In this regard, for the obtained travel orientation, as a smoothing process, by increasing a specific gravity thereof as a value of the acceleration increases, specifically, by obtaining an addition average by multiplying it by a coefficient according to the magnitude of the acceleration A3, influence of the acceleration caused by a factor other than walking can be reduced, and thus the accuracy can be increased.

Based on the above, the travel orientation calculating unit 33 first receives GPS latitude longitude data GL representing the latitude and the longitude from the GPS circuit 24 through the argument acquiring unit 48, acquires an argument of the current position based on the GPS latitude longitude data GL, generates argument data DA, and supplies the argument data DA to the travel orientation calculating unit 49.

The travel orientation calculating unit 49 identifies which of the acceleration section SA or the deceleration section SR the current point in time belongs to based on the acceleration/deceleration information IAR supplied from the acceleration/deceleration section estimating unit 47.

Then, the travel orientation calculating unit 49 regards an orientation of the acceleration (A3x,A3y) in the horizontal direction supplied from the BPF 44 as the travel orientation as is when the current point in time belongs to the deceleration section SR but regards the direction opposite thereto as the travel orientation when the current point in time belongs to the acceleration section SA.

Further, the travel orientation calculating unit 49 corrects the travel orientation based on the argument data DA, generates travel orientation data C0 representing the travel orientation, and supplies the travel orientation data C0 to the travel orientation smoothing unit 50.

Further, the travel orientation calculating unit 49 calculates a horizontal acceleration value Ahs representing the magnitude of the acceleration (A3x, A3y) in the horizontal direction, and supplies the horizontal acceleration value Ahs to the travel orientation smoothing unit 50.

As the smoothing process, the travel orientation smoothing unit 50 multiplies the travel orientation data C0 by a coefficient according to the magnitude of the horizontal acceleration value Ahs, then calculates an addition average during a certain period of time (for example, during 1 second), generates the travel orientation data C1, and supplies the travel orientation data C1 to the orientation filter 34 (Fig. 3).

As described above, the travel orientation calculating unit 49 identifies which of the acceleration section SA and the deceleration section SR the current point in time belongs to based on the acceleration/deceleration information IAR, performs the correction process according to an argument, and generates the travel orientation data C0 representing the travel orientation.

Further, the travel orientation smoothing unit 50 performs the smoothing process on the orientation represented by the travel orientation data C0 with the specific gravity according to the magnitude of the acceleration A3, and thus the highly accurate travel orientation data C1 is generated.

As described above, the travel orientation calculating unit 33 can generate the travel orientation data C1 representing the travel orientation in which the user walks based on the acceleration A1 and the geomagnetic value M.

[1-4. Processing procedure]

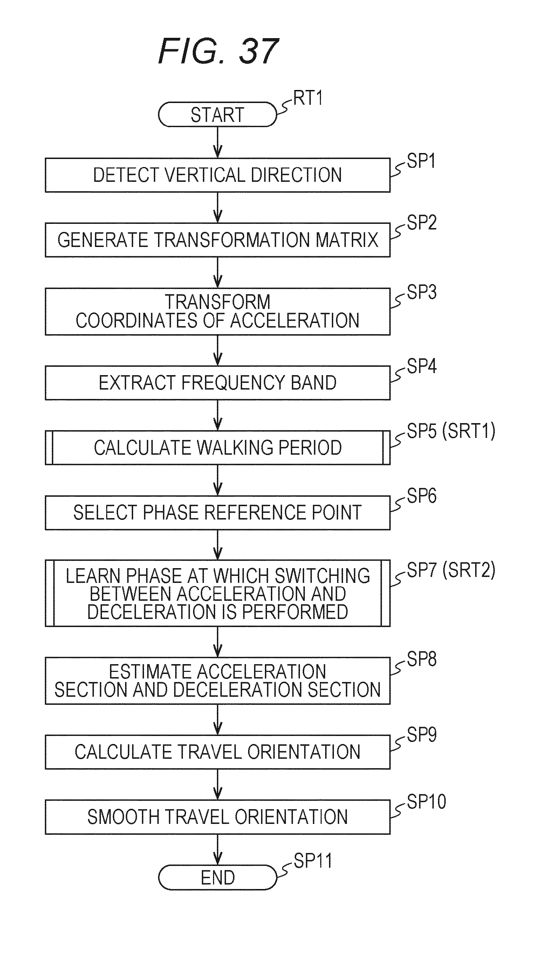

Next, a series of processing procedures performed to calculate travel orientation through the travel orientation calculating unit 33 (Figs. 3 and 4) will be described with reference to flowcharts of Figs. 37 to 39.

[1-4-1. Travel orientation calculation processing procedure]

The control unit 10 of the smart phone 1 (Fig. 1) reads the travel orientation calculation program from the non-volatile memory 14, and executes the travel orientation calculation program, and so a travel orientation calculation processing procedure RT1 (Fig. 37) starts, and causes the process to proceed to step SP1.

In step SP1, the control unit 10 integrates a value of the acceleration A1 for 2 seconds through the vertical direction detecting unit 41 (Fig. 4), generates the gravity acceleration G (Gx, Gy, Gz), and causes the process to proceed to the next step SP2.

In step SP2, the control unit 10 calculates the unit vector U (ex, ey, ez) of the earth coordinate system viewed from the detection coordinate system according to Equation (4) through the transformation matrix generating unit 42 (Fig. 4), and causes the process to proceed to the next step SP43.

In step SP3, the control unit 10 performs coordinate transformation of transforming the acceleration A1 of the detection coordinate system into the acceleration A2 of the earth coordinate system (A2x, A2y, A2z) according to Equation (5) through the coordinate transforming unit 43 (Fig. 4), and causes the process to proceed to the next step SP4.

In step SP4, the control unit 10 extracts the band frequency of about 1 to 10 [Hz] in the acceleration A2 through the BPF 44 (Fig. 4), generates the acceleration A3 (A3x, A3y, A3z), and causes the process to proceed to the next step SP5.

In step SP5, the control unit 10 calculates the walking period PW through a processing procedure according to a walking period calculation sub routine SRT1 (the details will be described later) through the walking period calculating unit 45 (Fig. 4), and causes the process to proceed to the next step SP6.

In step SP6, the control unit 10 sets a downward zero-cross point interposed between a maximum point and a minimum point at which a difference becomes maximum in a range corresponding to the walking period PW from an arbitrary point in time in the vertical acceleration Av as the phase reference point PS through the walking period calculating unit 45. Further, the control unit 10 sets an upward zero-cross point appearing thereafter as the reference upward zero-cross point PU, and causes the process to proceed to the next step SP7.

In step SP7, the control unit 10 selects the acceleration/deceleration switching phase PC through the acceleration/deceleration section switching phase learning unit 46 while performing the adjacent phase exclusion process through a processing procedure according to an acceleration/deceleration switching phase learning sub routine SRT2 (the details will be described later), and causes the process to proceed to the next step SP8.

In step SP8, the control unit 10 estimates a section from the acceleration/deceleration switching phase PC first appearing after the reference upward zero-cross point PU to the acceleration/deceleration switching phase PC appearing thereafter in the walking period PW having the phase reference point PS as the starting point as the deceleration section SR through the acceleration/deceleration section estimating unit 47 (Fig. 4).

Further, the control unit 10 alternately estimates each section delimited at each subsequent acceleration/deceleration switching phase PC as the acceleration section SA or the deceleration section SR through the acceleration/deceleration section estimating unit 47, and causes the process to proceed to the next step SP9.

In step SP9, the control unit 10 causes the travel orientation calculating unit 49 (Fig. 4) to set an orientation, represented by the acceleration (A3x, A3y) of the horizontal direction, as the travel orientation as is when the current point in time belongs to the deceleration section SR, sets a direction opposite thereto as the travel orientation when the current point in time belongs to the acceleration section SA, and causes the process to proceed to the next step SP10.

In step SP10, the control unit 10 calculates an addition average for one second by multiplying the travel orientation data C0 by a coefficient according to the magnitude of the horizontal acceleration value Ahs and calculates the travel orientation data C1 through the travel orientation smoothing unit 50.

Then, the control unit 10 supplies the travel orientation data C1 to the orientation filter 34 (Fig. 3), causes the process to proceed to the next step SP11, and then ends the travel orientation calculation processing procedure RT1.

[1-4-2. Walking period calculation processing procedure]

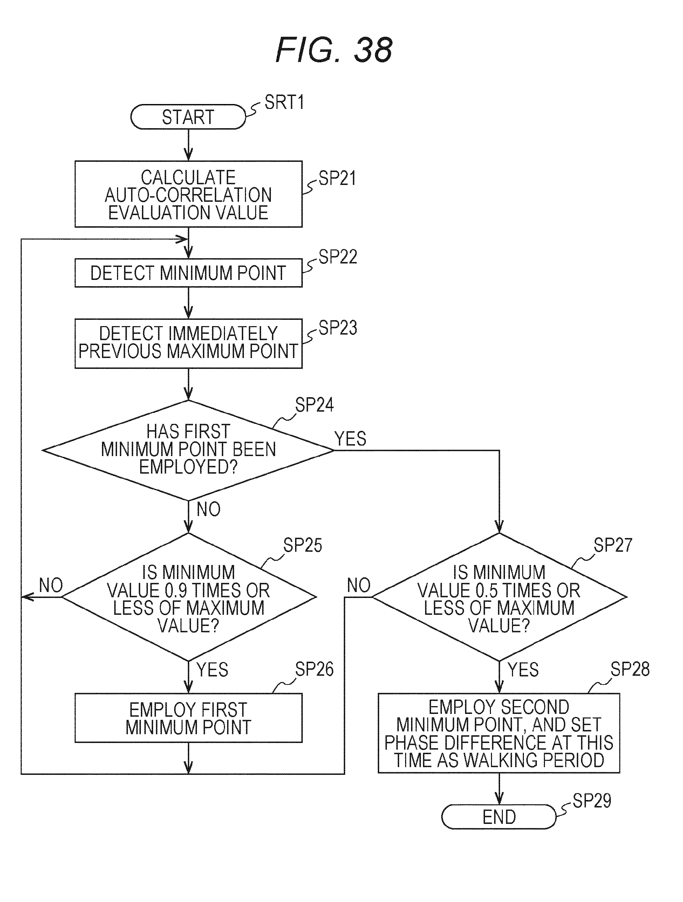

When the process proceeds to step SP5 in the travel orientation calculation processing procedure RT1 (Fig. 37), the control unit 10 of the smart phone 1 (Fig. 1) starts the walking period calculation sub routine SRT1 (Fig. 38) as the operation process performed by the walking period calculating unit 45 (Fig. 4), and causes the process to proceed to step SP21.
In step SP21, the control unit 10 sets an arbitrary portion of the vertical acceleration Av as the function f(t), calculates the auto-correlation evaluation value using the auto-correlation evaluation function g(t) according to Equation (7), and causes the process to proceed to the next step SP22.
In step SP22, the control unit 10 detects a minimum point while sequentially changing the phase difference t for the auto-correlation evaluation value from 1 to the increasing direction, and causes the process to proceed to the next step SP23.
In step SP23, the control unit 10 detects a maximum point having appeared immediately before the minimum point detected in step SP22, and causes the process to proceed to the next step SP24.
In step SP24, the control unit 10 determines whether or not the first minimum point has been already employed. Here, when a negative result is obtained, the control unit 10 causes the process to proceed to step the next SP25.
In step SP25, the control unit 10 determines whether or not a value (that is, a minimum value) of a minimum point of current interest is 0.9 times or less of a value (that is, a maximum value) of a maximum point having appeared immediately before according to Equation (8). Here, when a negative result is obtained, this means that a difference between the maximum value and the minimum value is extremely small, and the minimum point of current interest is highly unlikely to represent a first step. At this time, the control unit 10 causes the process to return step SP22 again, and detects a next minimum point.
Meanwhile, when a positive result is obtained in step SP25, this means that the minimum point of current interest may be considered to represent the first step, and at this time, the control unit 10 causes the process to proceed to the next step SP26.
In step SP26, the control unit 10 employs the minimum point of current interest as the minimum point of the first step (that is, corresponding to the first step), and then causes the process to return step SP22 again in order to detect the minimum point corresponding to a second step.
Meanwhile, when a positive result is obtained in step SP24, that is, when the process returns to step SP24 again after the first minimum point is employed in step SP26, the control unit 10 causes the process to proceed to the next step SP27.
In step SP27, the control unit 10 determines whether or not a value (that is, a minimum value) of a minimum point of current interest is 0.5 times or less of a value (that is, a maximum value) of a maximum point having appeared immediately before according to Equation (9). Here, when a negative result is obtained, this means that a difference between the maximum value and the minimum value is extremely small, and the minimum point of current interest may be considered not to represent the second step. At this time, the control unit 10 causes the process to return step SP22 again, and detects a next minimum point.
Meanwhile, when a positive result is obtained in step SP27, this means that the minimum point of current interest may be considered represent the second step, and at this time, the control unit 10 causes the process to proceed to the next step SP28.
In step SP28, the control unit 10 employs the minimum point of current interest as the minimum point of the second step (that is, corresponding to the second step), and sets the phase difference t at this time as the walking period PW. Thereafter, the control unit 10 causes the process to proceed to the next step SP29, ends the walking period calculation sub routine SRT1, and then causes the process to return step SP5 in the travel orientation calculation processing procedure RT1 (Fig. 37).

[1-4-3. Acceleration/deceleration switching phase learning processing procedure]

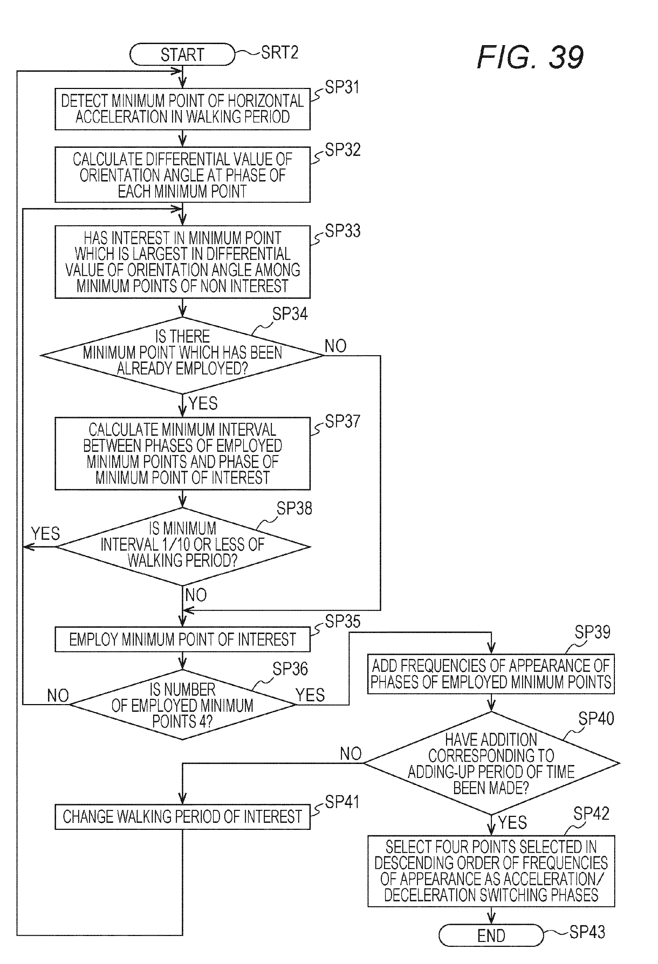

When the process proceeds to step SP7 in the travel orientation calculation processing procedure RT1 (Fig. 37), the control unit 10 of the smart phone 1 (Fig. 1) starts the acceleration/deceleration switching phase learning sub routine SRT2 (Fig. 39) as the operation process performed by the acceleration/deceleration section switching phase learning unit 46 (Fig. 4), and causes the process to proceed to step SP31.
In step SP31, the control unit 10 has interest in a certain walking period PW, and calculates the horizontal acceleration Ah for each of phases in the corresponding walking period PW based on the acceleration A3 according to Equation (6). Further, the control unit 10 detects the minimum point appearing in the horizontal acceleration Ah, and causes the process to proceed to the next step SP32.
In step SP32, the control unit 10 calculates a differential value of the orientation angle Cm for each of phases at which the minimum point is detected, and causes the process to proceed to the next step SP33.

In step SP33, the control unit 10 has interest in a minimum point which is largest in the differential value of the orientation angle Cm among minimum points of non-interest, and causes the process to proceed to the next step SP34.

In step SP34, the control unit 10 determines whether or not there is a minimum point which has been already employed. Here, when a negative result is obtained, this means that the minimum point of current interest is a minimum point of first interest. At this time, the control unit 10 causes the process to proceed to the next step SP35 in order to unconditionally employ the minimum point of current interest without considering an interval with other minimum points.

In step SP35, the control unit 10 employs the minimum point of current interest, and causes the process to proceed to the next step SP36.

In step SP36, the control unit 10 determines whether or not the number of employed minimum points has reached 4. Here, when a negative result is obtained, this means that it is necessary to employ more minimum points, and at this time, the control unit 10 returns to step SP33 again in order to have interest in a next minimum point.

However, when a positive result is obtained in step SP34, this means that it is necessary to consider an interval between the already employed minimum point and the minimum point of current interest, and at this time, the control unit 10 causes the process to proceed to the next step SP37.

In step SP37, the control unit 10 calculates a minimum interval (hereinafter, referred to as a "minimum interval") among intervals between phases of the employed minimum points and a phase of the minimum point of current interest, and causes the process to proceed to the next step SP38.

In step SP38, the control unit 10 determines whether or not the calculated minimum interval is a tenth (1/10) or less of the walking period PW. Here, when a negative result is obtained, this means that the minimum point of current interest is sufficiently apart from the employed minimum point, and even when a section interposed between both points is set as the acceleration section SA or the deceleration section SR, the pedestrian's motion does not become unnatural. At this time, the control unit 10 causes the process to proceed to the above-described step SP35, and employs the minimum point of current interest.

Meanwhile, when a positive result is obtained in step SP38, this means that since the minimum point of current interest is too close to the employed minimum point, when a section interposed between both points is set as the acceleration section SA or the deceleration section SR, the pedestrian's motion becomes unnatural. At this time, the control unit 10 causes the process to return to step SP33 in order to have interest in a next minimum point without employing the minimum value of current interest as the adjacent phase exclusion process.

Thereafter, when a positive result is obtained in step SP36, this means that minimum points of four points valid for the walking period PW of current interest have been employed, and at this time, the control unit 10 causes the process to proceed to the next step SP39.

In step SP39, the control unit 10 calculates the frequencies of appearance of the phases of employed respective minimum points, and causes the process to proceed to step SP40.

In step SP40, the control unit 10 determines whether or not the phases of respective minimum points have been added up as the frequency of appearance for all the walking period PW included in a predetermined adding-up period of time. Here, when a negative result is obtained, this means that there is a walking period PW of non-interest in which the phase of the minimum point is not added up, and at this time, the control unit 10 causes the process to proceed to step SP41.

In step SP41, the control unit 10 sets the walking period PW of non interest as the walking period PW of new interest, and causes the process to return to step SP31 again in order to add the phase of the minimum point to the frequency of appearance even for the corresponding walking period PW.

Meanwhile, when a positive result is obtained in step SP40, this means that a sufficient addition result for the frequency of appearance of the minimum point has been obtained, and at this time, the control unit 10 causes the process to proceed to step SP42.

In step SP42, the control unit 10 finally employs four points in order from a phase which is highest in the frequency of appearance of the minimum point as the acceleration/deceleration switching phase PC. Thereafter, the control unit 10 causes the process to proceed to step SP43, ends the acceleration/deceleration switching phase learning sub routine SRT2, and causes the process to return to step SP7 in the travel orientation calculation processing procedure RT1 (Fig. 37).

[1-5. Calculation result of travel orientation]

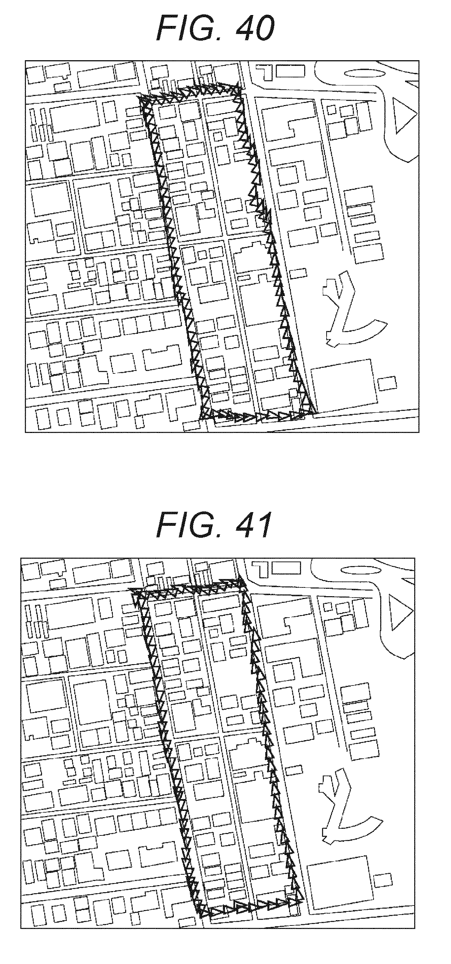

Next, a moving trajectory on a map obtained by combining the travel orientation data C1 generated by a series of orientation calculation processes based on data such as the acceleration obtained when the user actually walks and the GPS position data GP obtained by the GPS circuit 24 is illustrated in Figs. 40 to 42.

In Figs. 40 to 42, the user's walking trajectory is plotted on map data through trajectory marks of isosceles triangles, and a travel orientation in each plot is represented by directions indicated by vertex angles thereof. Further, the user is walking on an actual road along blocks counterclockwise in a rectangular form.

Referring to Figs. 40 to 42, it can be understood that the travel orientation is at the right slightly further than an original travel direction in some blocks, but the travel orientation can be properly calculated when the user walks.

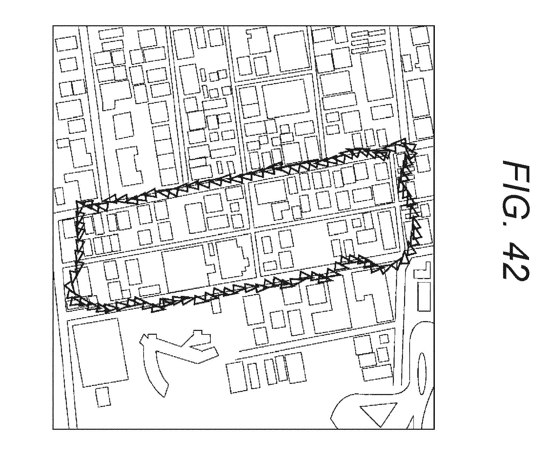

Further, it can be understood that when the carrying position is the hip pocket W3 (Fig. 42), an error tends to be slightly larger than when the carrying position is the breast pocket W1 (Fig. 40) or the jacket right pocket W2 (Fig. 41), but the travel orientation can be calculated with a sufficiently reliable degree.

[1-6. Operations and Effects]

In the above-described configuration, when the navigation function is executed in the walking mode, the control unit 10 of the smart phone 1, by executing the navigation program and the travel orientation calculation program, implements the functional blocks illustrated in Figs. 3 and 4.

At this time, the travel orientation calculating unit 33 first calculates the gravity acceleration G based on the integration value of the acceleration A1, decides the vertical direction, generates the unit vector U of the earth coordinate system viewed from the detection coordinate system according to Equation (4), and performs coordinate transformation of transforming the acceleration A1 of the detection coordinate system into the acceleration A2 of the earth coordinate system.

Then, the travel orientation calculating unit 33 extracts a frequency band mainly caused by walking from the acceleration A2, uses the extracted frequency band as the acceleration A3, and decides the walking period PW based on a phase difference at which the auto-correlation degree increases for the second time using the auto-correlation evaluation value of the vertical acceleration Av which is the vertical direction component. Further, the travel orientation calculating unit 33 decides the phase reference point PS and the reference upward zero-cross point PU based on the maximum point and the minimum point in which the difference in the vertical acceleration Av is maximum.

Further, the travel orientation calculating unit 33 learns a phase at which the minimum point appears in the horizontal acceleration Ah and the differential value of the orientation angle Cm is large at each of walking periods PW having the phase reference point PS as the starting point, and selects the acceleration/deceleration switching phase PC based on the learning result.

Further, the travel orientation calculating unit 33 alternately estimates the deceleration section SR or the acceleration section SA at each the acceleration/deceleration switching phase PC based on the reference upward zero-cross point PU in the walking period PW, sets an orientation represented by the acceleration of the horizontal direction or an orientation opposite thereto as the travel orientation, performs smoothing, and calculates the travel orientation data C1.

Thus, the smart phone 1 can appropriately decide the acceleration/deceleration switching phase PC using the minimum point appearing in the horizontal acceleration Ah, and thus can separate the deceleration section SR from the acceleration section SA at the time of walking with a high degree of accuracy. As a result, the smart phone 1 can appropriately determine which of the travel direction or the opposite direction thereto the acceleration in the horizontal direction works on, and can calculate the user's final travel orientation with a high degree of accuracy.

Particularly, the smart phone 1 separates the acceleration section SA from the deceleration section SR and then calculates the final travel orientation, and thus compared to a technique of defining a major axis on a horizontal plane without separating both sections, influence of motion in which the waist rotates can be effectively excluded.

At this time, the smart phone 1 detects the acceleration/deceleration switching phase PC based on a phase at which the minimum point appears in the horizontal acceleration Ah according to the user's motion principle at the time of walking, and thus can clearly separate the deceleration section SR from the acceleration section SA at each acceleration/deceleration switching phase PC.

Further, a characteristic of the horizontal acceleration Ah differs according to the user's carrying position as illustrated in Figs. 25 to 29, but since the minimum point appears at least a phase at which switching between the deceleration section SR and the acceleration section SA is performed with a high degree of accuracy, the smart phone 1 can properly detect the acceleration/deceleration switching phase PC.

Further, the smart phone 1 can learn a phase in which the differential value of the orientation angle Cm is large among the minimum points of the horizontal acceleration Ah as a phase at which switching between acceleration and deceleration is performed, exclude the other factor point OT, and select the acceleration/deceleration switching phase PC with a high degree of accuracy.

When the learning process is performed, the smart phone 1 can effectively exclude the other factor point OT even by performing the adjacent phase exclusion process based on the fact that switching between acceleration and deceleration is hardly performed in an extremely short period of time at the time of walking.

Further, when the walking period PW is calculated, the smart phone 1 can calculate the walking period PW with a high degree of accuracy by using the auto-correlation evaluation value based on the fact that the vertical acceleration Av periodically varies along with a walking motion periodically repeated by the user.

Particularly, in this case, as an employment condition based on a difference between a maximum value and a minimum value for the first step is set to be different from that for the second step as in Equations (8) and (9), the first step by the other foot and the second step by the same foot can be appropriately detected, and as a result, the calculation accuracy of the walking period PW can be dramatically improved.

Further, the smart phone 1 sets the falling zero-cross point at which the difference between the maximum value and the minimum value is maximum in the walking period PW as the phase reference point PS, and thus can delimit each walking period PW with a high degree of accuracy.

Further, the smart phone 1 decides the first deceleration section SR based on the reference upward zero-cross point PU appearing after the phase reference point PS based on a relation between the waveform of the vertical acceleration Av and the deceleration section SR and the acceleration section SA, and thus can appropriately decide a subsequent deceleration section SR and a subsequent acceleration section SA.

Further, the smart phone 1 performs an addition with a specific gravity according to the magnitude of the acceleration in the smoothing process, increases a specific gravity of a sample in which reliability of a travel orientation is high, uses all samples effectively, and thus can increase the accuracy of the travel orientation data C1 which is finally obtained.

Particularly, even when a temporal noise component is included in the acceleration, the smart phone 1 uses all samples, and thus can suppress influence thereof to be relatively small.

Further, in the coordinate system transformation process, the detection coordinate system is transformed into the earth coordinate system at a time through the transformation matrix represented by the unit vector U, and thus the smart phone 1 reduces the operation processing amount to the minimum and does not occur an error occurring when transformation into the rotary coordinate system is performed.

According to the above-described configuration, the smart phone 1 decides the walking period PW using the auto-correlation evaluation value of the vertical acceleration Av, and further decides the phase reference point PS and the reference upward zero-cross point PU. Further, the smart phone 1 learns a phase at which the minimum point appears in the horizontal acceleration Ah while performing the adjacent phase exclusion process, and selects the acceleration/deceleration switching phase PC based on the learning result. Further, the smart phone 1 alternately estimates each section delimited at each acceleration/deceleration switching phase PC after the reference upward zero-cross point PU as the deceleration section SR or the acceleration section SA, sets an orientation represented by the acceleration in the horizontal direction or an orientation opposite thereto as the travel orientation, performs smoothing, and calculates the travel orientation data C1. As a result, the smart phone 1 can obtain an appropriate travel direction for each of the deceleration section SR and the acceleration section SA and calculate the user's final travel orientation with a high degree of accuracy.

<2. Another embodiment>

The above embodiment has been described in connection with the example in which the acceleration/deceleration switching phase PC is selected based a phase at which the minimum point appears in the horizontal acceleration Ah through the learning process.

The present technology is not limited to this example, and four points selected in the descending order of the differential values of the orientation angle Cm among the minimum points of the horizontal acceleration Ah may be selected as the acceleration/deceleration switching phase PC as is. As described above, as the learning process is omitted, the operation processing amount of the smart phone 1 can be reduced, and thus power consumption can be reduced.

Further, the above embodiment has been described in connection with the example in which a phase in which the frequency of appearance is to be added by the learning process among the minimum points of the horizontal acceleration Ah is selected using the magnitude of the differential value of the orientation angle Cm as an index.

The present technology is not limited to this example, and for example, selection may be made based on various kinds of indices such as a relation with a phase at which the maximum point or the minimum point appears in the vertical acceleration Av. Further, in the learning process, the number of phases in which the frequency of appearance is to be added for the first walking period PW is not limited to 4 but may be 5 or more or 3 or less. Particularly, when 5 or more phases are added, for example, a non-integral number obtained by multiplying the frequency by a coefficient according to the magnitude of the differential value of the orientation angle Cm may be added.

Further, the above embodiment has been described in connection with the example in which in the adjacent phase exclusion process of learning a phase at which the minimum point appears in the horizontal acceleration Ah, when a minimum interval between phases is a tenth (1/10) or less of the walking period PW, a corresponding phase is excluded from an addition target.

The present technology is not limited to this example, and a phase may be excluded from an addition target based on an arbitrary threshold value such as an eighth (1/8) or less or a fifteenth (1/15) or less of the walking period PW. Alternatively, for example, when an interval between phases in which the minimum point appears is determined as being relatively large, the adjacent phase exclusion process may be omitted.

Further, the above embodiment has been described in connection with the example in which when a phase at which the minimum point appears in the horizontal acceleration Ah is learned as the adjacent phase exclusion process, a phase having a very short interval with an employed phase is excluded from an employment candidate in a corresponding walking period.

The present technology is not limited to this example, and for example, when an appearing phase is learned, the frequency may be added without excluding a phase having a very small interval with an employed phase, and when 4 phases are selected in the descending order of the frequencies after addition, the 4 phases may be sequentially employed while excluding a phase having a very small interval with an employed phase as the adjacent phase exclusion process.

Further, the above embodiment has been described in connection with the example in which a period of time corresponding to two steps of the user is calculated as the walking period, and four points are selected as the acceleration/ deceleration switching phase within the walking period.

The present technology is not limited to this example, and for example, when a bag in which the smart phone 1 is put is slung over the shoulder, and switching between acceleration and deceleration is determined as being additionally performed as the bag periodically comes into contact with the body while walking, an arbitrary number of acceleration/ deceleration switching phases such as 6 points or 8 points may be set within the walking period. In this case, since the acceleration section SA and the deceleration section SR can be alternately estimated at each acceleration/deceleration switching phase PC, the final travel orientation can be appropriately calculated.

Further, the above embodiment has been described in connection with the example in which the acceleration/ deceleration switching phase PC first appearing after the reference upward zero-cross point PU is set as the starting point of the deceleration section SR, and each section delimited at each subsequent acceleration/deceleration switching phase PC is alternately estimated as the acceleration section SA or the deceleration section SR.

The present technology is not limited to this example, and for example, the deceleration section SR and the acceleration section SA may be estimated based on other indices, for example, the acceleration/deceleration switching phase PC first appearing after the starting point of the walking period PW, that is, the phase reference point PS may be set as the starting point of the deceleration section SR. In this case, it is desirable to estimate the deceleration section SR and the acceleration section SA using a feature appearing in the waveform of the vertical acceleration Av as an index as described above with reference to Figs. 13 to 15 and Figs. 25 to 29.

Further, the above embodiment has been described in connection with the example in which the walking period PW is calculated based on the auto-correlation evaluation value obtained using the auto-correlation function representing the vertical acceleration Av.

The present technology is not limited to this example, and various kinds of auto-correlation functions may be used, for example, the auto-correlation evaluation value obtained using the auto-correlation function representing the horizontal acceleration Ah or the orientation angle Cm may be used,.

Further, the above embodiment has been described in connection with the example in which a phase in which the minimum point appears for the second time in the auto-correlation evaluation value is set as the walking period PW.

The present technology is not limited to this example, and the walking period PW may be calculated through various kinds of techniques, for example, the minimum point appearing after the second maximum point may be set as the walking period PW. In this case, it is desirable to set a phase in which a correlation degree increases for the second time when the phase difference gradually increases according to a property of the auto-correlation function as the walking period PW.

Further, the above embodiment has been described in connection with the example in which the coefficients in Equations (8) and (9) are set to 0.9 and 0.5, respectively.

The present technology is not limited to this example, and an arbitrary value may be decided as each of the coefficients. In this case, based on the fact that the first step is the other foot, and the second step is the same foot, j and k representing the coefficients in Equations (8) and (9), respectively, are preferably set to satisfy a relation of Equation (10).

$$0 < k < j \qquad \qquad \ldots (10)$$

Further, the above embodiment has been described in connection with the example in which the falling zero-cross point at which the difference between the maximum value and the minimum value in the vertical acceleration Av is maximum is set as the phase reference point PS, and the corresponding falling zero-cross point is used as the starting point of the walking period PW.

The present technology is not limited to this example, and the phase reference point PS may be decided based on various selection criteria, for example, a phase of a maximum point or a minimum point at which the difference between the maximum value and the minimum value in the vertical acceleration Av is maximum may be set as the phase reference point PS. In this case, the phase reference point PS is preferably decided using a feature appearing once in the vertical acceleration Av within the walking period PW.

Further, the above embodiment has been described in connection with the example in which the frequency band of about 1 to 10 [Hz] is extracted by the BPF 44 (Fig. 4).

The present technology is not limited to this example, and for example, various kinds of frequency bands such as 0.5 to 20 [Hz] may be extracted. In this case, it is desirable to extract a frequency band in which the frequency corresponding to two steps of the pedestrian is included but the DC component and the high frequency component are removed. Further when a small amount of unnecessary component is included in the frequency band, only the low frequency band may be removed.

Further, the above embodiment has been described in connection with the example in which coordinate transformation is performed such that transformation into the earth coordinate system having the magnetic north related to the horizontal direction having the y axis is performed.

The present technology is not limited to this example, and for example, transformation into a coordinate system having axes obtained by projecting the x and y axes of the detection coordinate system onto the horizontal plane having the x and y axes, that is, a coordinate system in which the magnetic north is not considered may be performed, a travel orientation may be calculated based on the acceleration, and then transformation into an orientation based on the magnetic north may be performed. Further, the coordinate system is not limited to the orthogonal coordinate system, and an arbitrary coordinate system such as the polar coordinate system may be used.

Further, the above embodiment has been described in connection with the example in which as the smoothing process, an addition average is obtained by multiplying the calculated travel orientation by a coefficient according to the magnitude of the acceleration in the horizontal direction.

The present technology is not limited to this example, and for example, an addition average may be obtained by multiplying by various coefficients such as a coefficient proportional to the square of the acceleration in the horizontal direction, or the smoothing process may be omitted by using the same value (for example, "1") for all coefficients.

Further, the above embodiment has been described in connection with the example in which the travel orientation is corrected according to an argument obtained based on the latitude and the longitude of the current position.

The present technology is not limited to this example, and for example, when it is difficult to obtain the latitude and the longitude of the current position since the GPS signal is not received, the travel orientation may be corrected based on a standard correction value, or the correction process may not be performed. Further, the latitude and the longitude of the current position are not limited to the values based on the GPS signal, and for example, may be obtained based on various kinds of signals or information such as a signal of a wireless local area network (LAN).

Further, the above embodiment has been described in connection with the example in which a weight of the travel orientation data C1 increases only when the orientation filter 34 applies weighting to the GPS orientation data GC and the travel orientation data C1 based on the reception status of the GPS signal, that is, the reception accuracy of the GPS signal is low.

The present technology is not limited to this example, and for example, the orientation filter 34 may use the travel orientation data C1 regularly. As a result, since the reception frequency of the GPS signal by the GPS circuit 24 can be reduced, power consumption of the smart phone 1 can be suppressed.

Further, the above embodiment has been described in connection with the example in which a plurality of operation modes are set to the navigation function, and when the walking mode is selected, the travel orientation data C1 is calculated through the travel orientation calculating unit 33.

The present technology is not limited to this example, and for example, a setting may be made to constantly monitor the waveform of the acceleration A1 while the navigation program is being executed, and when walking is detected from the feature thereof, the travel orientation data C1 may be calculated through the travel orientation calculating unit 33.

Further, the above embodiment has been described in connection with the example in which a map screen is displayed on the display unit 4 as guidance in the navigation process.

The present technology is not limited to this example, and guidance may be provided to the user through various techniques, for example, guidance for a direction of the destination may be provided through a sound.

Further, the above embodiment has been described in connection with the example in which the present technology is applied to the smart phone 1.

The present technology is not limited to this example, and the present technology can be applied to various kinds of electronic devices which can be carried by the user while walking and provide a positioning function such as portable navigation apparatuses, digital video cameras, digital still cameras, portable music players, portable video players, portable game machines, pedometers, or laptop or slate computers. In all cases, it is desirable to obtain the vertical acceleration and horizontal acceleration and generate the final travel orientation data C1 based on the vertical acceleration and horizontal acceleration.

Further, the above embodiment has been described in connection with the example in which the control unit 10 of the smart phone 1 executes the navigation program and the travel orientation calculation program stored in the ROM 12, the nonvolatile memory 14, or the like in advance, and performs various kinds of processes according to the travel orientation calculation processing procedure RT1.

The present technology is not limited to this example, and the control unit 10 of the smart phone 1 may perform the above-described processes according to an application program installed from a storage medium, an application program downloaded from the Internet, or an application program installed through other various kinds of sources.

Further, the above embodiment has been described in connection with the example in which the travel orientation calculating unit 33 serving as an travel orientation calculation apparatus is configured with the acceleration sensor 27 and the coordinate transforming unit 43 serving as a detecting unit, the walking period calculating unit 45 serving as a walking period setting unit, the acceleration/deceleration section switching phase learning unit 46 serving as an acceleration/deceleration switching phase setting unit, the acceleration/deceleration section estimating unit 47 serving as an acceleration/deceleration section setting unit, and the travel orientation calculating unit 49 serving as a travel orientation deciding unit.

However, the present technology is not limited to this example, and the travel orientation calculation apparatus may be configured with a detecting unit, a walking period setting unit, an acceleration/deceleration switching phase setting unit, an acceleration/deceleration section setting unit, and a travel orientation deciding unit which have various kinds of configurations.

Further, the present technology may have the following configurations.

(1) A travel orientation calculation apparatus, including:

a detecting unit that detects a vertical acceleration representing an acceleration in a vertical direction and a horizontal acceleration representing an orientation and a magnitude of an acceleration in a horizontal plane among accelerations generated along with walking of a user;

a walking period setting unit that sets a period of time corresponding to two steps of the user as a walking period based on a zero-cross point of the vertical acceleration;

an acceleration/deceleration switching phase setting unit that sets an acceleration/deceleration switching phase at which switching between acceleration and deceleration in the user's travel direction is performed based on a phases at which the magnitude of the horizontal acceleration is minimum in the walking period;

an acceleration/deceleration section estimating unit that alternately estimates each section delimited at each acceleration/deceleration switching phase as an acceleration section or a deceleration section; and

a travel orientation deciding unit that decides the user's travel orientation based on an orientation represented by the horizontal acceleration in the deceleration section and an orientation opposite to the orientation represented by the horizontal acceleration in the acceleration section.

(2) The travel orientation calculation apparatus according to (1),

wherein the acceleration/deceleration switching phase setting unit sets a phase which is high in a frequency that the magnitude of the horizontal acceleration is minimum in the walking period as the acceleration/deceleration switching phase.

(3) The travel orientation calculation apparatus according to (1) or (2), wherein the acceleration/deceleration switching phase setting unit calculates an orientation angle representing an orientation in which the acceleration works through polar coordinates and a differential value of the orientation angle based on the horizontal acceleration, and sets a predetermined number of phases selected in the descending order of the differential values of the orientation angle among phases at which the magnitude of the horizontal acceleration is minimum as an addition target of the frequency.

(4) The travel orientation calculation apparatus according to (2) or (3),

wherein the acceleration/deceleration switching phase setting unit sets the acceleration/deceleration switching phase sequentially from a phase which is highest in the frequency that the magnitude of the horizontal acceleration is minimum in the walking period as the acceleration/deceleration switching phase, and excludes a phase whose interval with an already set acceleration/deceleration switching phase is less than a predetermined interval from a setting target of a new acceleration/deceleration switching phase.

(5) The travel orientation calculation apparatus according to any one of (1) to (4),

wherein the acceleration/deceleration switching phase setting unit sets four points as the acceleration/deceleration switching phase in the walking period.

(6) The travel orientation calculation apparatus according to any one of (1) to (5),

wherein the walking period setting unit sets a length of the walking period based on a period of time until a waveform

## EP 2 711 669 A1

similar to a predetermined portion in the vertical acceleration appears again.

(7) The travel orientation calculation apparatus according to (5),

wherein the walking period setting unit calculates an auto-correlation degree while sequentially increasing a phase difference on the vertical acceleration, and sets a phase difference at which an extreme value in which the auto-correlation degree increases appears for the second time as the length of the walking period.

(8) The travel orientation calculation apparatus according to (6) or (7),

wherein the walking period setting unit calculates the auto-correlation degree based on an auto-correlation value that decreases as the auto-correlation degree increases, and when a first minimum value of the auto-correlation value is a j times (here, $0 < j < 1$) or less of a maximum value appearing immediately before, and a second minimum value of the auto-correlation value is a k times (here, $0 < k < j$) or less of a maximum value appearing immediately before, sets a phase difference at which the second minimum value appears as the length of the walking period.

(9) The travel orientation calculation apparatus according to any one of (1) to (8),

wherein the walking period setting unit sets the walking period, and sets a falling zero-cross point at which a difference between a maximum value and a minimum value which are adjacent to each other in the vertical acceleration in the walking period is maximum as a reference phase used as a reference of a phase.

(10) The travel orientation calculation apparatus according to any one of (1) to (9),

wherein the detecting unit further includes

an acceleration sensor that detects an acceleration applied to the travel orientation calculation apparatus, and obtains an acceleration detection value represented by a specific three-dimensional (3D) detection coordinate system;

a vertical direction calculating unit that calculates a vertical direction based on the acceleration detection value; and a transforming unit that uses the vertical direction component among the acceleration detection values as the vertical acceleration, and uses a two-dimensional (2D) component included in a horizontal plane orthogonal to the vertical direction among the acceleration detection values as the horizontal acceleration.

(11) The travel orientation calculation apparatus according to (10),

wherein the detecting unit further includes a geomagnetic sensor that detects a direction of a magnetic north in the travel orientation calculation apparatus, and

the transforming unit transforms an orientation represented by the horizontal acceleration into an absolute orientation based on the magnetic north.

(12) The travel orientation calculation apparatus according to (10) or (11),

wherein the transforming unit transforms the acceleration detection value from the detection coordinate system into an earth coordinate system having each of vertical direction and a direction corresponding to the magnetic north as an axis direction.

(13) The travel orientation calculation apparatus according to any one of (1) to (12), further including,

a travel orientation smoothing unit that calculates an addition average by multiplying the travel orientation by a coefficient according to the magnitude of the horizontal acceleration.

INDUSTRIAL APPLICABILITY

The present disclosure can be used for portable navigation apparatuses, mobile telephones with a navigation function, or various kinds of electronic devices such as digital still cameras or computer devices.

REFERENCE SIGNS LIST

| | |
|---|---|
| 1 | Smart phone |
| 10 | Control unit |
| 27 | Acceleration sensor |
| 28 | Geomagnetic sensor |
| 33 | Travel orientation calculating unit |
| 34 | Orientation filter |
| 41 | Vertical direction detecting unit |
| 42 | Transformation matrix generating unit |
| 43 | Coordinate transforming unit |
| 44 | BPF |
| 45 | Walking period calculating unit |
| 46 | Acceleration/deceleration section switching phase learning unit |

| 47 | Acceleration/deceleration section estimating unit |
|---|---|
| 49 | Travel orientation calculating unit |
| 50 | Travel orientation smoothing unit |
| A1, A2, A3 | Acceleration |
| M | Geomagnetic value |
| Av | Vertical acceleration |
| Ah | Horizontal acceleration |
| PW | Walking period |
| PS | Phase reference point |
| PC | Acceleration/deceleration switching phase |
| PU | Reference upward zero-cross point |
| SR | Deceleration section |
| SA | Acceleration section |
| IAR | Acceleration/deceleration information |
| C1 | Travel orientation data |

**Claims**

1. A travel orientation calculation apparatus, comprising:

   a detecting unit that detects a vertical acceleration representing an acceleration in a vertical direction and a horizontal acceleration representing an orientation and a magnitude of an acceleration in a horizontal plane among accelerations generated along with walking of a user;
   a walking period setting unit that sets a period of time corresponding to two steps of the user as a walking period based on a zero-cross point of the vertical acceleration;
   an acceleration/deceleration switching phase setting unit that sets an acceleration/deceleration switching phase at which switching between acceleration and deceleration in the user's travel direction is performed based on a phases at which the magnitude of the horizontal acceleration is minimum in the walking period;
   an acceleration/deceleration section estimating unit that alternately estimates each section delimited at each acceleration/deceleration switching phase as an acceleration section or a deceleration section; and
   a travel orientation deciding unit that decides the user's travel orientation based on an orientation represented by the horizontal acceleration in the deceleration section and an orientation opposite to the orientation represented by the horizontal acceleration in the acceleration section.

2. The travel orientation calculation apparatus according to claim 1,
   wherein the acceleration/deceleration switching phase setting unit sets a phase which is high in a frequency that the magnitude of the horizontal acceleration is minimum in the walking period as the acceleration/deceleration switching phase.

3. The travel orientation calculation apparatus according to claim 2,
   wherein the acceleration/deceleration switching phase setting unit calculates an orientation angle representing an orientation in which the acceleration works through polar coordinates and a differential value of the orientation angle based on the horizontal acceleration, and sets a predetermined number of phases selected in the descending order of the differential values of the orientation angle among phases at which the magnitude of the horizontal acceleration is minimum as an addition target of the frequency.

4. The travel orientation calculation apparatus according to claim 2,
   wherein the acceleration/deceleration switching phase setting unit sets the acceleration/deceleration switching phase sequentially from a phase which is highest in the frequency that the magnitude of the horizontal acceleration is minimum in the walking period as the acceleration/deceleration switching phase, and excludes a phase whose interval with an already set acceleration/deceleration switching phase is less than a predetermined interval from a setting target of a new acceleration/deceleration switching phase.

5. The travel orientation calculation apparatus according to claim 1,
   wherein the acceleration/deceleration switching phase setting unit sets four points as the acceleration/deceleration switching phase in the walking period.

6. The travel orientation calculation apparatus according to claim 1,
   wherein the walking period setting unit sets a length of the walking period based on a period of time until a waveform similar to a predetermined portion in the vertical acceleration appears again.

7. The travel orientation calculation apparatus according to claim 6,
   wherein the walking period setting unit calculates an auto-correlation degree while sequentially increasing a phase difference on the vertical acceleration, and sets a phase difference at which an extreme value in which the auto-correlation degree increases appears for the second time as the length of the walking period.

8. The travel orientation calculation apparatus according to claim 7,
   wherein the walking period setting unit calculates the auto-correlation degree based on an auto-correlation value that decreases as the auto-correlation degree increases, and when a first minimum value of the auto-correlation value is a j times (here, $0 < j < 1$) or less of a maximum value appearing immediately before, and a second minimum value of the auto-correlation value is a k times (here, $0 < k < j$) or less of a maximum value appearing immediately before, sets a phase difference at which the second minimum value appears as the length of the walking period.

9. The travel orientation calculation apparatus according to claim 1,
   wherein the walking period setting unit sets the walking period, and sets a falling zero-cross point at which a difference between a maximum value and a minimum value which are adjacent to each other in the vertical acceleration in the walking period is maximum as a reference phase used as a reference of a phase.

10. The travel orientation calculation apparatus according to claim 1,
    wherein the detecting unit further includes
    an acceleration sensor that detects an acceleration applied to the travel orientation calculation apparatus, and obtains an acceleration detection value represented by a specific three-dimensional (3D) detection coordinate system;
    a vertical direction calculating unit that calculates a vertical direction based on the acceleration detection value; and
    a transforming unit that uses the vertical direction component among the acceleration detection values as the vertical acceleration, and uses a two-dimensional (2D) component included in a horizontal plane orthogonal to the vertical direction among the acceleration detection values as the horizontal acceleration.

11. The travel orientation calculation apparatus according to claim 10,
    wherein the detecting unit further includes a geomagnetic sensor that detects a direction of a magnetic north in the travel orientation calculation apparatus, and
    the transforming unit transforms an orientation represented by the horizontal acceleration into an absolute orientation based on the magnetic north.

12. The travel orientation calculation apparatus according to claim 11,
    wherein the transforming unit transforms the acceleration detection value from the detection coordinate system into an earth coordinate system having each of the vertical direction and a direction corresponding to the magnetic north as an axis direction.

13. The travel orientation calculation apparatus according to claim 1, further comprising,
    a travel orientation smoothing unit that calculates an addition average by multiplying the travel orientation by a coefficient according to the magnitude of the horizontal acceleration.

14. A travel orientation calculation method, comprising:

    a detecting step of detecting, by a detecting unit, a vertical acceleration representing an acceleration in a vertical direction and a horizontal acceleration representing an orientation and a magnitude of an acceleration in a horizontal plane among accelerations generated along with walking of a user;
    a walking period setting step of setting, by a walking period setting unit, a period of time corresponding to two steps of the user as a walking period based on a zero-cross point of the vertical acceleration;
    an acceleration/deceleration switching phase setting step of setting, by an acceleration/deceleration switching phase setting unit, an acceleration/deceleration switching phase at which switching between acceleration and deceleration in the user's travel direction is performed based on a phases at which the magnitude of the horizontal acceleration is minimum in the walking period;
    an acceleration/deceleration section estimating step of alternately estimating, by an acceleration/deceleration section estimating unit, each section delimited at each acceleration/deceleration switching phase as an acceleration section or a deceleration section; and

a travel orientation deciding step of deciding, by a travel orientation deciding unit, the user's travel orientation based on an orientation represented by the horizontal acceleration in the deceleration section and an orientation opposite to the orientation represented by the horizontal acceleration in the acceleration section.

15. A travel orientation calculation program causing an information processing apparatus to execute:

a detecting step of detecting a vertical acceleration representing an acceleration in a vertical direction and a horizontal acceleration representing an orientation and a magnitude of an acceleration in a horizontal plane among accelerations generated along with walking of a user;

a walking period setting step of setting a period of time corresponding to two steps of the user as a walking period based on a zero-cross point of the vertical acceleration;

an acceleration/deceleration switching phase setting step of setting an acceleration/deceleration switching phase at which switching between acceleration and deceleration in the user's travel direction is performed based on a phases at which the magnitude of the horizontal acceleration is minimum in the walking period;

an acceleration/deceleration section estimating step of alternately estimating each section delimited at each acceleration/deceleration switching phase as an acceleration section or a deceleration section; and

a travel orientation deciding step of deciding the user's travel orientation based on an orientation represented by the horizontal acceleration in the deceleration section and an orientation opposite to the orientation represented by the horizontal acceleration in the acceleration section.

16. A navigation apparatus, comprising:

a detecting unit that detects a vertical acceleration representing an acceleration in a vertical direction and a horizontal acceleration representing an orientation and a magnitude of an acceleration in a horizontal plane among accelerations generated along with walking of a user;

a walking period setting unit that sets a period of time corresponding to two steps of the user as a walking period based on a zero-cross point of the vertical acceleration;

an acceleration/deceleration switching phase setting unit that sets an acceleration/deceleration switching phase at which switching between acceleration and deceleration in the user's travel direction is performed based on a phases at which the magnitude of the horizontal acceleration is minimum in the walking period;

an acceleration/deceleration section estimating unit that alternately estimates each section delimited at each acceleration/deceleration switching phase as an acceleration section or a deceleration section;

a travel orientation deciding unit that decides the user's travel orientation based on an orientation represented by the horizontal acceleration in the deceleration section and an orientation opposite to the orientation represented by the horizontal acceleration in the acceleration section; and

a provision control unit that provides the user with guidance based on a current position detected by a predetermined position detecting unit and the travel orientation through a predetermined providing unit.

# FIG. 1

1 SMART PHONE

6 SPEAKER

2 BODY SECTION

4 DISPLAY UNIT

3A TOUCH PANEL

3B OPERATION BUTTON

3 OPERATING UNIT

z

x

y

5 MICROPHONE

# FIG. 2

1 SMART PHONE

- 27 ACCELERATION SENSOR
- 28 GEOMAGNETIC SENSOR
- 16 DB
- 7
- 6
- 5
- 25
- 24 GPS CIRCUIT
- 27A A/D
- 28A A/D
- 22 COMMUNICATION PROCESSING UNIT
- 21 AUDIO PROCESSING UNIT
- 15
- 11 CPU
- 12 ROM
- 13 RAM
- 14 NON-VOLATILE MEMORY
- 3 OPERATING UNIT
- 4 DISPLAY UNIT
- 23 EXTERNAL I/F

10 CONTROL UNIT

EP 2 711 669 A1

FIG. 3

## FIG. 4

33 TRAVEL ORIENTATION CALCULATING UNIT

EP 2 711 669 A1

## FIG. 5

## FIG. 6

# FIG. 7

(A)

(B)

(C)

# FIG. 8

(A)

(B)

## FIG. 9

EP 2 711 669 A1

*FIG. 10*

SR DECELERATION SECTION

*FIG. 11*

SR DECELERATION SECTION

SA ACCELERATION SECTION

# FIG. 12

SA ACCELERATION SECTION

# FIG. 13

(A)

(B)

(C)

# FIG. 14

(A)

Av

(B)

Ah

(C)

Cm

# FIG. 15

(A)

Av

(B)

Ah

(C)

Cm

## FIG. 16

## FIG. 17

## FIG. 18

## FIG. 19

# FIG. 20

# FIG. 21

# FIG. 22

(A)

(B)

## FIG. 23

## FIG. 24

## FIG. 25

(A)

Av

(B)

Ah

(C)

Cm

SR    SA    SR    SA

(D)

160
140
120
100
80
60
40
20
0

5    10    15    20    25    30    35    40    45    50

NORMALIZED PHASE

## FIG. 26

(A) Av

(B) Ah

(C) Cm

SR    SA    SR    SA

(D)

NORMALIZED PHASE

## FIG. 27

# FIG. 28

# FIG. 29

(A)

(B)

(C)

(D)

NORMALIZED PHASE

# FIG. 30

(A)

(B)

# *FIG. 31*

## FIG. 32

(A)

Av

(B)

Ah

(C)

Cm

(D)

IAR

ACCELERATION

DECELERATION

# FIG. 33

(A)

Av

(B)

Ah

(C)

Cm

(D)

IAR

ACCELERATION

DECELERATION

Ts

## FIG. 34

(A)     Av

(B)     Ah

(C)     Cm

(D)     IAR    ACCELERATION / DECELERATION

## FIG. 35

(A)

Av

(B)

Ah

(C)

Cm

(D)

IAR

ACCELERATION

DECELERATION

Ts

## FIG. 36

(A)

(B)

(C)

(D)

Av

Ah

Cm

IAR

ACCELERATION

DECELERATION

# FIG. 37

START — RT1

DETECT VERTICAL DIRECTION — SP1

GENERATE TRANSFORMATION MATRIX — SP2

TRANSFORM COORDINATES OF ACCELERATION — SP3

EXTRACT FREQUENCY BAND — SP4

CALCULATE WALKING PERIOD — SP5 (SRT1)

SELECT PHASE REFERENCE POINT — SP6

LEARN PHASE AT WHICH SWITCHING BETWEEN ACCELERATION AND DECELERATION IS PERFORMED — SP7 (SRT2)

ESTIMATE ACCELERATION SECTION AND DECELERATION SECTION — SP8

CALCULATE TRAVEL ORIENTATION — SP9

SMOOTH TRAVEL ORIENTATION — SP10

END — SP11

## FIG. 38

START — SRT1

CALCULATE
AUTO-CORRELATION
EVALUATION VALUE — SP21

DETECT MINIMUM POINT — SP22

DETECT IMMEDIATELY
PREVIOUS MAXIMUM POINT — SP23

HAS FIRST
MINIMUM POINT BEEN
EMPLOYED? — SP24

YES

NO

IS MINIMUM
VALUE 0.9 TIMES OR
LESS OF MAXIMUM
VALUE? — SP25

NO

YES

EMPLOY FIRST
MINIMUM POINT — SP26

IS MINIMUM
VALUE 0.5 TIMES OR
LESS OF MAXIMUM
VALUE? — SP27

NO

YES

EMPLOY SECOND
MINIMUM POINT, AND SET
PHASE DIFFERENCE AT THIS
TIME AS WALKING PERIOD — SP28

END — SP29

61

FIG. 39

## FIG. 40

## FIG. 41

# FIG. 42

# EP 2 711 669 A1

| INTERNATIONAL SEARCH REPORT | International application No. |
|---|---|
| | PCT/JP2012/062441 |

**A. CLASSIFICATION OF SUBJECT MATTER**
*G01C21/00*(2006.01)i

According to International Patent Classification (IPC) or to both national classification and IPC

**B. FIELDS SEARCHED**

Minimum documentation searched (classification system followed by classification symbols)
G01C21/00

Documentation searched other than minimum documentation to the extent that such documents are included in the fields searched
Jitsuyo Shinan Koho        1922–1996   Jitsuyo Shinan Toroku Koho   1996–2012
Kokai Jitsuyo Shinan Koho  1971–2012   Toroku Jitsuyo Shinan Koho   1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-116315 A  (Yamaha Corp.),<br>22 May 2008 (22.05.2008),<br>paragraphs [0071] to [0073]; fig. 13<br>(Family: none) | 1-16 |
| A | WO 2006/104140 A1  (Asahi Kasei EMD Corp.),<br>05 October 2006 (05.10.2006),<br>paragraphs [0069] to [0071]<br>& US 2009/0143972 A1     & US 2010/0191501 A1<br>& EP 1867951 A1           & CN 101151508 A<br>& KR 10-2007-0110107 A   & KR 10-0977935 B | 1-16 |
| A | JP 2010-271167 A  (KDDI Corp.),<br>02 December 2010 (02.12.2010),<br>paragraphs [0038] to [0039]; fig. 5<br>(Family: none) | 1-16 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 June, 2012 (13.06.12) | Date of mailing of the international search report<br>26 June, 2012 (26.06.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/062441 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-302419 A  (Casio Computer Co., Ltd.), 24 October 2003 (24.10.2003), paragraphs [0042] to [0045], [0052] & US 2003/0191582 A1 | 1-16 |
| A | JP 2008-39619 A  (Aichi Micro Intelligent Corp.), 21 February 2008 (21.02.2008), paragraphs [0078] to [0082]; fig. 9 to 10 (Family: none) | 1-16 |
| A | JP 2009-186376 A  (Fujitsu Ltd.), 20 August 2009 (20.08.2009), paragraph [0067] (Family: none) | 1-16 |
| P,A | JP 2011-117945 A  (Casio Computer Co., Ltd.), 16 June 2011 (16.06.2011), paragraphs [0029] to [0041]; fig. 2 to 4 (Family: none) | 1-16 |
| P,A | JP 2011-163861 A  (KDDI Corp.), 25 August 2011 (25.08.2011), paragraphs [0039] to [0069]; fig. 1 to 8 (Family: none) | 1-16 |
| P,A | JP 2012-21870 A  (KDDI Corp.), 02 February 2012 (02.02.2012), paragraphs [0046] to [0051], [0068] to [0092]; fig. 1, 6 to 10 (Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4126388 B